# EUROPEAN PATENT APPLICATION

(11) **EP 3 970 463 A1**
(43) Date of publication of application: **23.03.2022**
(21) Application number: 20810354.9
(22) Date of filing: 15.05.2020
(51) Int. Cl.: A01B 69/00, G05D 1/02

(54) **AUTOMATIC TRAVEL SYSTEM FOR WORK VEHICLE**

(30) Priority: 17.05.2019 JP 2019093806
(71) Applicant: Yanmar Power Technology Co., Ltd., Osaka-shi Osaka 530-0013 (JP)
(72) Inventor: SHIRAFUJI Taiki, Osaka-shi, Osaka 530-0014 (JP); KURODA Akifumi, Osaka-shi, Osaka 530-0014 (JP)
(74) Representative: Dennemeyer & Associates S.A.
(86) International application number: PCT/JP2020/019412
(87) International publication number: WO 2020/235471

(57) **Abstract**

This automatic travel system for a work vehicle has: an automatic travel control unit (46F) which, using a satellite positioning system, causes a work vehicle (V1) to automatically travel in accordance with a target path at a registered work site; and a standby position setting unit (46K) which sets a standby position of the work vehicle (V1). The standby setting unit (46K) acquires an entry point at a time when the work vehicle (V1) has entered the registered work site from outside thereof, and sets the entry point as a standby position. The automatic travel control unit (46F) determines whether or not a condition for causing the work vehicle (V1) to stand by at the standby position has been met, and, in the case where the standby condition has been met, causes the work vehicle (V1) to travel automatically from the present position to the standby position and then to stand by at the standby position.

## Description

### TECHNICAL FIELD

The present invention relates to an automatic travel system for a work vehicle that enables automatic travel of a work vehicle, such as a tractor, a riding mower, a riding rice transplanter, a riding sowing machine, a riding fertilizer application machine, a combine harvester, and an unmanned mower.

### BACKGROUND ART

An automatic travel system for a work vehicle, for example, includes a replenishment position setting unit that sets a replenishment position (an example of a standby position) of materials at a position specified by a user, and is configured to cause the work vehicle to travel automatically to the above-described replenishment position and to stand by at the replenishment position when the work vehicle needs to be replenished with the materials (for example, see Patent Literature 1).

### CITATION LIST

### Patent Literature

Patent Literature 1: Japanese Unexamined Patent Application Publication No. 2018-050491

### DISCLOSURE OF INVENTION

### PROBLEMS TO BE SOLVED BY THE INVENTION

In the automatic driving system for a work vehicle described in Patent Literature 1, the replenishment position of the materials is set at a single position that is specified by the user in advance using a replenishment position setting window shown on a display of a wireless communication terminal. Accordingly, for example, the set replenishment position may be unsuitable for a reason for the standby of the work vehicle (in this case, the replenishment of the materials), a work condition, or the like because, in reality, there is an obstacle such as a tree in the vicinity of the replenishment position, which interferes with the replenishment of the materials to the work vehicle, or because the replenishment position is far from a current position of the work vehicle, which requires the replenishment of the materials, and thus it takes time to move the work vehicle to the replenishment position.

In order to prevent occurrence of the inconveniences as described above, it is necessary for the user to specify an appropriate replenishment position in full consideration of the reason for the standby of the work vehicle, the work situation, and the like. In addition, in the case where any of the inconveniences as described above occurs, the user has to specify the replenishment position again. Therefore, a burden on the user to specify the appropriate replenishment position is increased.

In view of this circumstance, a primary object of the present invention is to provide an automatic travel system for a work vehicle capable of setting a standby position suitable for a reason for standby of a work vehicle, a work situation, and the like while reducing a burden on a user.

### MEANS FOR SOLVING THE PROBLEMS

A first characteristic configuration of the present invention is in a point that an automatic travel system for a work vehicle includes: an automatic travel control section that causes a work vehicle to travel automatically along a target path at a registered work site by using a satellite positioning system; and a standby position setting section that sets a standby position of the work vehicle, in which the standby position setting section acquires an entry point at a time of entering the registered work site from outside the registered work site and sets the entry point as the standby position, and in which the automatic travel control section determines whether a standby condition to cause the work vehicle to stand by at the standby position is satisfied and, in the case where the standby condition is satisfied, causes the work vehicle to travel automatically from a current position to the standby position and to stand by at the standby position.

With such a configuration, it is possible to set the standby position suited for a reason for standby of the work vehicle, a work situation, and the like while reducing a burden on a user.

A second characteristic configuration of the present invention is in a point that an automatic travel control section that causes a work vehicle to travel automatically along a target path at a registered work site by using a satellite positioning system and a standby position setting section that sets a standby position of the work vehicle are provided, the standby position setting section sets an intersection point of an extension line of a work path included in the target path with an outline of the registered work site, as the standby position, and the automatic travel control section determines whether a standby condition to cause the work vehicle to stand by at the standby position is satisfied and, in the case where the standby condition is satisfied, causes the work vehicle to travel automatically from a current position to the standby position and to stand by at the standby position.

With such a configuration, it is possible to set the standby position suited for the reason for the standby of the work vehicle, the work situation, and the like while reducing the burden on a user.

A fourth characteristic configuration of the present invention is in a point that an automatic travel control section that causes a work vehicle to travel automatically along a target path at a registered work site by using a satellite positioning system, a standby position setting section that sets a standby position of the work vehicle at plural locations in the registered work site, a standby position selection section that selects a single standby position from the plural standby positions are provided, and the automatic travel control section determines whether a standby condition to cause the work vehicle to stand by at the standby position is satisfied and, in the case where the standby condition is satisfied, causes the work vehicle to travel automatically from a current position to the standby position selected by the standby position selection section and to stand by at the standby position.

With such a configuration, it is possible to select the standby position suited for the work situation, such as the current position of the work vehicle, or the like which varies from time to time when the above-described standby condition is satisfied, while reducing the burden on the user.

### BRIEF DESCRIPTION OF DRAWINGS

FIG. 1 is a view illustrating a schematic configuration of an automatic travel system for a work vehicle.
FIG. 2 is a schematic diagram illustrating a transmission configuration of a tractor.
FIG. 3 is a block diagram illustrating the schematic configuration of the automatic travel system.
FIG. 4 is a block diagram illustrating a schematic configuration of an obstacle detection system.
FIG. 5 is a plan view illustrating a target path, a standby position, and the like of a work vehicle in a field (registered work site) in a first embodiment.
FIG. 6 is a view illustrating a state where a display screen of a display device is switched to a registered field display screen.
FIG. 7 is a view illustrating a state where the display screen of the display device is switched to a selected field display screen.
FIG. 8 is a view illustrating a state where the display screen of the display device is switched to a work device selection screen.
FIG. 9 is a view illustrating a state where the display screen of the display device is switched to a headland area setting screen.
FIG. 10 is a view illustrating a state where the display screen of the display device is switched to a work condition setting screen.
FIG. 11 is a flowchart of standby position acquisition control in the first embodiment.
FIG. 12 is a flowchart of seed replenishment movement control.
FIG. 13 is a plan view illustrating the target paths, the standby positions, and the like of the work vehicles for side-by-side work in the field (registered work site) in the first embodiment.
FIG. 14 is a plan view illustrating a target path, a replenishment standby position (a standby position), and the like of a work vehicle in a field (registered work site) in a second embodiment.
FIG. 15 is a partial plan view illustrating an off-field movement path, an off-field standby position (a standby position), and the like of the work vehicle in the field (registered work site) in the second embodiment.
FIG. 16 is a flowchart of standby position acquisition control in the second embodiment.
FIG. 17 is a flowchart of seedling replenishment movement control in the second embodiment.
FIG. 18 is a flowchart of the seedling replenishment movement control in the second embodiment.
FIG. 19 is a flowchart of off-field movement path acquisition control in the second embodiment.
FIG. 20 is a plan view illustrating a target path, a discharge standby position (a standby position), and the like of a work vehicle in a field (registered work site) in a third embodiment.
FIG. 21 is a plan view illustrating the target path, the plural discharge standby positions (standby positions), and the like of the work vehicle in the field (registered work site) in the third embodiment.
FIG. 22 is a flowchart of grain discharge movement control in the third embodiment.
FIG. 23 is a plan view illustrating a target path, an evacuation standby position (a standby position), and the like of a work vehicle in a landing area (registered work site) in a fourth embodiment.
FIG. 24 is a plan view illustrating an example of the evacuation standby positions (the standby positions), an evacuation path, and the like of the work vehicle selected in a vegetated area (work area) of a landing area (registered work site) in the fourth embodiment.
FIG. 25 is a plan view illustrating an example of the evacuation standby positions (the standby positions), the evacuation path, and the like of the work vehicle selected in the vegetated area (work area) of the landing area (registered work site) in the fourth embodiment.
FIG. 26 is a plan view illustrating an example of the evacuation standby positions (the standby positions), the evacuation path, and the like of the work vehicle selected in the vegetated area (work area) of the landing area (registered work site) in the fourth embodiment.
FIG. 27 is a flowchart of standby position selection control in the fourth embodiment.

### DESCRIPTION OF EMBODIMENTS

### First Embodiment

A description will hereinafter be made on, as an example of a mode for carrying out the present invention, a first embodiment in which the automatic travel system for a work vehicle according to the present invention is applied to a tractor as an example of the work vehicle with reference to the drawings.

The automatic travel system for a work vehicle according to the present invention can be applied to, in addition to the tractor, riding work vehicles, such as a riding rice transplanter, a combine harvester, a riding mower, a snowplow, and a wheel loader, and unmanned work vehicles such as an unmanned cultivator and an unmanned mower, for example.

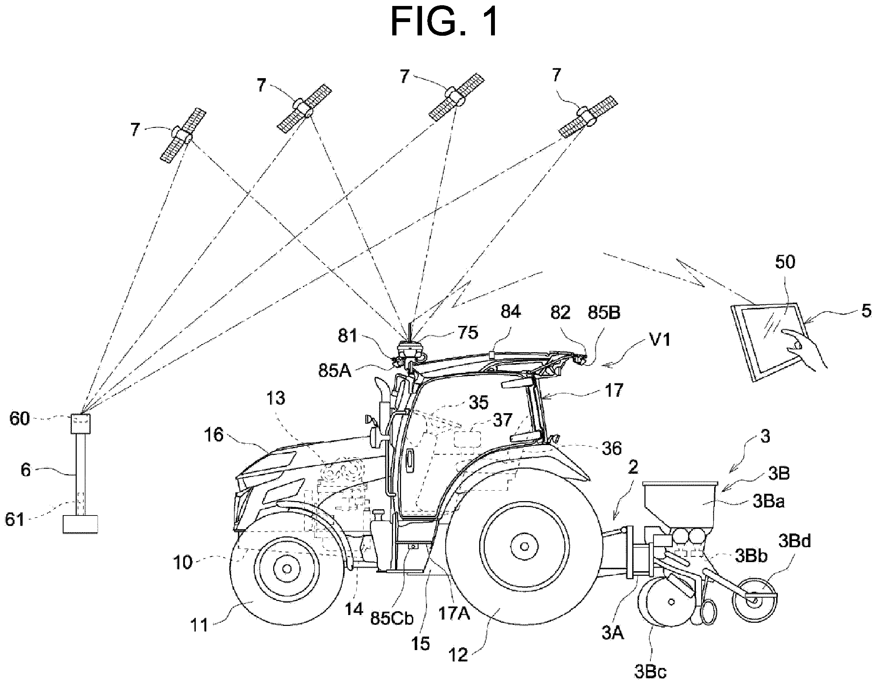

As illustrated in FIG. 1, in a tractor V1 exemplified in this first embodiment, a work device for sowing (hereinafter referred to as a sowing device) 3 is coupled to a rear portion via a three-point linkage mechanism 2. In this way, this tractor V1 is configured for a sowing specification to perform sowing work using the sowing device 3, which is coupled to the rear portion thereof. The sowing device 3 is coupled to the rear portion of the tractor V1 in a liftable and rollable manner.

Instead of the sowing device 3, any of various work devices such as a fertilizer application device, a fertilizer sowing device, a chemical spraying device, a rotary cultivator, a plow, a disc harrow, a cultivator, a subsoiler, and a mower can be coupled to the rear portion of this tractor V1.

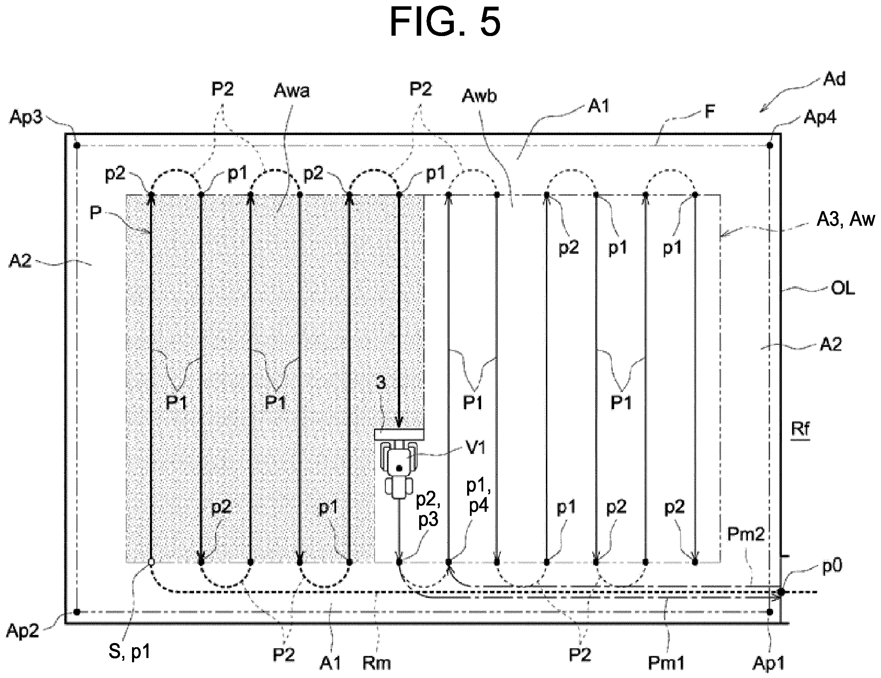

By using the automatic travel system for a work vehicle, the tractor V1 can travel automatically in fields Aa to Ag illustrated in FIGs. 5 to 6, which are exemplified as registered work sites, and the like. The fields Aa to Ag exemplified in FIGs. 5 to 6 are the fields Aa, Ab, Ad to Af in rectangular outer shapes and the deformed fields Ac, Ag in trapezoidal outer shapes. However, each of the registered fields may be the deformed field in a triangular or pentagonal outer shape, or may be the deformed field having a curved portion in at least one side of the outer shape.

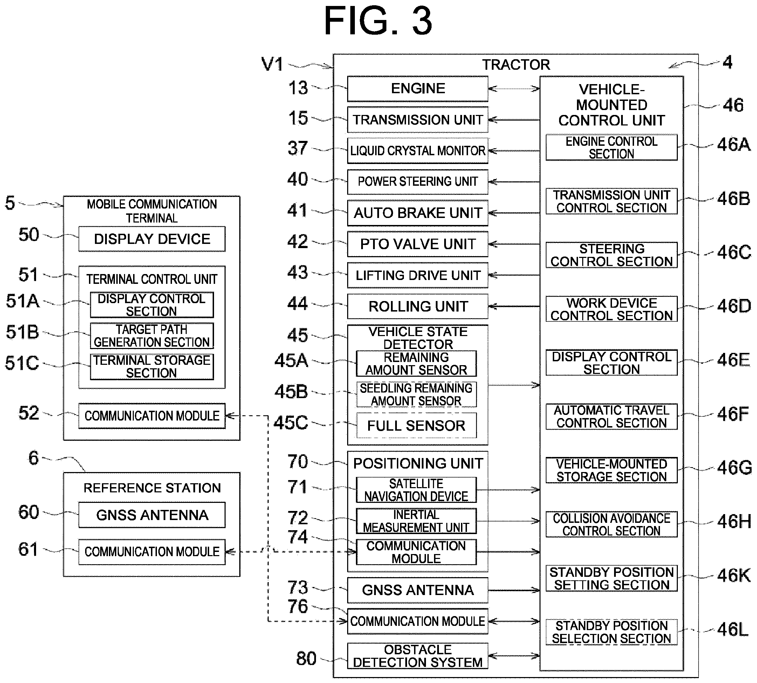

As illustrated in FIG. 1 and FIG. 3, the automatic travel system for a work vehicle includes: an automatic travel unit 4 mounted on the tractor V1; and a mobile communication terminal 5 as an example of wireless communication equipment that is set to be wirelessly communicable with the automatic travel unit 4. The mobile communication terminal 5 includes a multi-touch type display device (for example, a liquid crystal panel) 50 that allows various information displays, input operations, and the like related to automatic travel.

A tablet-type personal computer, a smartphone, or the like can be adopted as the mobile communication terminal 5. For the wireless communication, wireless local area network (LAN) such as Wi-Fi^{®}, short-range wireless communication such as Bluetooth^{®}, or the like can be adopted.

As illustrated in FIGs. 1 to 2, the tractor V1 includes: a front frame 10 that are arranged in a front portion thereof; right and left front wheels 11 that are steerable and drivable; right and left rear wheels 12 that are drivable; an electronically-controlled diesel engine (hereinafter referred to as the engine) 13 that has a common rail system; a main clutch 14 that connects/disconnects power from the engine 13; a transmission unit 15 that shifts the power transmitted through the main clutch 14; a hood 16 that covers the engine 13 and the like; a cabin 17 that is arranged in the rear portion of the tractor V1; and the like. An electronically-controlled gasoline engine having an electronic governor, or the like may be adopted as the engine 13.

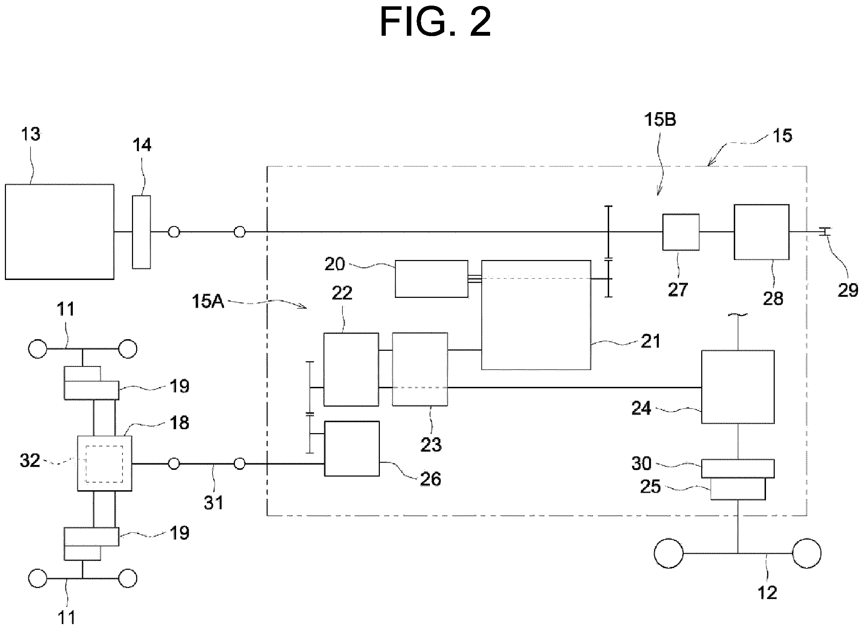

As illustrated in FIG. 2, the right and left front wheels 11 are steerably coupled to right and left ends of a front axle case 18, which is supported in a rollable manner by the front frame 10, via right and left front wheel gear cases 19, respectively. The right and left rear wheels 12 are supported by right and left rear axle cases (not illustrated) that are provided behind the transmission unit 15. The engine 13 is vibration-isolated and supported by the front frame 10.

As illustrated in FIG. 2, the transmission unit 15 has: a travel transmission system 15A that shifts the power from the engine 13 for travel; and a work transmission system 15B that shifts the power from the engine 13 for work.

The travel transmission system 15A includes: an electronically-controlled primary transmission 20 that shifts the power from the engine 13; an electro-hydraulically controlled forward-reverse switching device 21 that switches the power from the primary transmission 20 for forward travel or reverse travel; a gear-type secondary transmission 22 that shifts the power from the forward-reverse switching device 21 for the forward travel or the reverse travel at one of two high and low stages; a gear-type creep transmission 23 that shifts the power for the forward travel or the reverse travel from the forward-reverse switching device 21 to an ultra-low speed stage; a rear-wheel differential 24 that distributes the power from the secondary transmission 22 or the creep transmission 23 to the right and left rear wheels 12; right and left reduction gears 25 that decelerate the power from the rear-wheel differential 24 and transmits the decelerated power to the right and left rear wheels 12, respectively; an electro-hydraulically controlled transmission switching device 26 that switches transmission of the power from the secondary transmission 22 or the creep transmission 23 to the right and left front wheels 11.

The work transmission system 15B includes: a hydraulic PTO clutch 27 that connects/disconnects the power from the engine 13; a PTO transmission 28 that switches the power transmitted through the PTO clutch 27 to one of three forward stages and one reverse stage; a PTO shaft 29 that outputs the power from the PTO transmission 28 for work; and the like.

The transmission unit 15 includes right and left brakes 30 that separately brake the right and left rear wheels 12, respectively.

As the primary transmission 20, an integrated hydrostatic mechanical transmission (I-HMT), which is an example of a hydromechanical continuously variable transmission having higher transmission efficiency than a hydrostatic transmission (HST), is adopted.

Instead of the I-HMT, a continuously variable transmission, such as a hydraulic mechanical transmission (HMT) as an example of the hydromechanical continuously variable transmission, the hydrostatic transmission, or a belt-type continuously variable transmission, may be adopted as the primary transmission 20. Alternatively, instead of the continuously variable transmission, an electro-hydraulically controlled stepped transmission having plural hydraulic shift clutches, plural electromagnetic shift valves that control oil flows thereto, and the like may be adopted.

The transmission switching device 26 switches a transmission state to the right and left front wheels 11 among: a transmission cutoff state in which the transmission to the right and left front wheels 11 is cut off; a constant speed transmission state in which the power is transmitted to the right and left front wheels 11 such that circumferential speeds of the right and left front wheels 11 become the same as circumferential speeds of the right and left rear wheels 12; and a double speed transmission state in which the power is transmitted to the right and left front wheels 11 such that the circumferential speeds of the right and left front wheels 11 become approximately twice the circumferential speeds of the right and left rear wheels 12. The power from the transmission switching device 26 is transmitted to a front-wheel differential 32, which is built into the front axle case 18, via a transmission shaft 31 for driving the front wheels and the like. The front-wheel differential 32 distributes the power from the transmission switching device 26 to the right and left front wheels 11. The distributed power is transmitted to the right and left front wheels 11 through right and left transmission devices (not illustrated) that are built into the right and left front wheel gear cases 19, respectively. The right and left transmission devices decelerate the power from the front-wheel differential 32 and transmit the decelerated power to the right and left front wheels 11 while allowing steering of the right and left front wheels 11. The power taken from the PTO shaft 29 is transmitted to the work device via an external transmission shaft (not illustrated) or the like in the case where the work device such as sowing device or the fertilizer application device driven by the power is coupled to the rear portion of the tractor V1.

As illustrated in FIG. 1, the cabin 17 includes therein: a steering wheel 35 for manual steering; an occupant seat 36; a multi-touch type liquid crystal monitor 37 that allows the various information displays, the input operations, and the like; and the like. In this way, a boarding-type driving unit that allows an occupant to drive the tractor V1 is formed in the cabin 17.

Although not illustrated, the driving unit includes: an accelerator lever that can maintain an engine speed at a set speed; an accelerator pedal that can increase the engine speed from the set speed; a clutch pedal that enables an engagement/disengagement operation of the main clutch 14; a primary gear shift lever that enables a gear shift operation of the primary transmission 20; a reverser lever that enables a forward-reverse switching operation of the forward-reverse switching device 21; a secondary gear shift lever that enables a gear shift operation of the secondary transmission 22; a creep gear shift lever that enables a gear shift operation of the creep transmission 23; a PTO switch that enables an engagement/disengagement operation of the PTO clutch 27; a PTO gearshift lever that enables a gear shift operation of the PTO transmission 28; right and left brake pedals and a parking lever that enable a switching operation to braking states of the right and left brakes 30; and the like.

The right and left brakes 30 are mechanically linked to the right and left brake pedals and the parking lever. In the case where one or both of the right and left brakes 30 are depressed to be operated, one or both of the right and left brakes 30 brake the corresponding rear wheels 12 with a braking force that corresponds to a depressed operation amount at the time. In the case where the parking lever is operated and held in a braking range, the right and left brakes 30 brake the right and left rear wheels 12 with the braking force that corresponds to a holding position at the time.

As illustrated in FIG. 1, the sowing device 3 has: a sowing frame 3Athat is detachably coupled to the three-point linkage mechanism 2; and a sowing unit 3B for the number of working strips. Each of the sowing units 3B has: a storage section 3Ba that stores seeds as an example of agricultural materials; a delivery section 3Bb that delivers a predetermined amount of the seeds from the storage section 3Ba; a disc-type furrowing device 3Bc that forms a sowing furrow on a field surface; plural press wheels 3Bd that press covered soil after sowing; and the like. Although not illustrated, the sowing device 3 has: a ground wheel that is grounded during working travel of the tractor V1 and rotates in conjunction with the travel of the tractor V1; and a transmission system that transmits rotary power of the ground wheel to the delivery section 3Bb in each of the sowing units 3B. Each of the delivery sections 3Bb is driven by the rotary power from the ground wheel and thereby delivers, per predetermined amount, the seeds that are stored in each of the storage sections 3Ba. That is, the sowing device 3 is configured in a ground wheel drive mode to perform sowing by the rotary power of the ground wheel.

The sowing device 3 may be configured as a PTO-driven type that is driven by the power taken from the PTO shaft 29 or an electric type that is driven by power from an electric motor.

As illustrated in FIG. 3, the tractor V1 includes: a full-hydraulic power steering unit 40 that steers the right and left front wheels 11; an electro-hydraulically controlled auto brake unit 41 that operates the right and left brakes 30; an electronically-controlled PTO valve unit 42 that operates the PTO clutch 27; an electro-hydraulically controlled lifting drive unit 43 that lifts/lowers the sowing device 3; an electro-hydraulically controlled rolling unit 44 that rolls the sowing device 3 in a roll direction; a vehicle state detector 45 that includes various sensors, switches, and the like provided to the tractor V1; a vehicle-mounted control unit 46 that has various control sections; and the like.

The power steering unit 40 may be of an electric type having a steering electric motor.

The vehicle state detector 45 is a collective term for the various sensors, the switches, and the like that are provided in the sections of the tractor V1. Although not illustrated, the vehicle state detector 45 includes various sensors such as: an accelerator sensor that detects operation amounts of the accelerator lever and the accelerator pedal from idling positions; a speed sensor that detects the engine speed; a gear shift sensor that detects an operation amount of the primary gear shift lever; a vehicle speed sensor that detects the vehicle speed of the tractor V1; a reverser sensor that detects an operation position of the reverser lever; a steering angle sensor that detects a steering angle of the front wheel 11; a height sensor that detects a height position of the sowing device 3; an inclination sensor that detects a roll angle of the tractor V1; and plural remaining amount sensors 45A, each of which detects that a remaining amount of the seeds stored in respective one of the storage sections 3Ba in the sowing device 3 has dropped to a seed replenishment setting value (see FIG. 3). The vehicle state detector 45 includes various switches such as the PTO switch to command engagement/disengagement of the PTO clutch 27 and a lift switch to command lifting/lowering of the sowing device 3.

As illustrated in FIGs. 3 to 4, the vehicle-mounted control unit 46 includes: an engine control section 46Athat executes control related to the engine 13; a transmission unit control section 46B that executes control related to the vehicle speed and the forward-reverse switching of the tractor V1; a steering control section 46C that executes control related to steering; a work device control section 46D that executes control related to the work device such as the sowing device 3; a display control section 46E that executes control related to the display and notification on the liquid crystal monitor 37 and the like; an automatic travel control section 46F that executes control related to automatic travel; a non-volatile vehicle-mounted storage section 46G that stores an automatic travel target path P (see FIG. 5) generated according to a travel area in a field, and the like; and the like. Each of the control sections 46A to 46F is constructed of an electronic control unit, in which a microcontroller and the like are integrated, various control programs, and the like. The control sections 46A to 46F are connected in a mutually communicable manner via a Controller Area Network (CAN).

For example, in-vehicle Ethernet, CAN with Flexible Data rate (CAN-FD), or the like that is a communication standard other than the CAN or a next-generation communication standard may be adopted for the mutual communication among the control sections 46A to 46F.

When the accelerator lever is operated, the engine control section 46A executes engine speed maintenance control on the basis of detection information from the accelerator sensor and detection information from the rotation sensor so as to maintain the engine speed at a speed that corresponds to the operation amount of the accelerator lever from the idling position. In the case where the accelerator pedal is operated and the operation amount of the accelerator pedal from the idling position exceeds the operation amount of the accelerator lever from the idling position, the engine control section 46A performs, based on the detection information from the accelerator sensor and the detection information from the rotation sensor, the engine control section 46A executes engine speed change control on the basis of the detection information from the accelerator sensor and the detection information from the rotation sensor so as to change the engine speed to a speed that corresponds to the operation amount of the accelerator pedal from the idling position.

When the gear shift lever is operated, the transmission unit control section 46B executes vehicle speed control to change the vehicle speed of the tractor V1 to a speed corresponding to an operation position of the gear shift lever by controlling actuation of the primary transmission 20 on the basis of detection information from the gear shift sensor and detection information from the vehicle speed sensor. The vehicle speed control includes deceleration stop processing for decelerating the primary transmission 20 to a zero-speed state so as to stop the travel of the tractor V1 in the case where the gear shift lever is operated to a zero-speed position.

When the reverser lever is operated, the transmission unit control section 46B executes a forward-reverse switching control to switch a transmission state of the forward-reverse switching device 21 on the basis of detection information from the reverser sensor. The forward-reverse switching control includes: cutoff state switching processing for switching the forward-reverse switching device 21 to the transmission cutoff state when the reverser lever is operated to a neutral position; forward travel state switching processing for switching the forward-reverse switching device 21 to a forward transmission state when the reverser lever is operated to a forward position; and reverse travel state switching processing for switching the forward-reverse switching device 21 to a reverse transmission state when the reverser lever is operated to a reverse position.

When the PTO switch is operated to an ON position, the work device control section 46D controls actuation of the PTO valve unit 42 to switch the PTO clutch 27 from the transmission cutoff state to a transmission state. When the PTO switch is operated to an OFF position, the work device control section 46D controls the actuation of the PTO valve unit 42 to switch the PTO clutch 27 from the transmission state to the transmission cutoff state.

The work device control section 46D executes lifting control to control actuation of the lifting drive unit 43 on the basis of an operation of a lifting switch, detection information from the height sensor, a work height position and a non-work height position for evacuation that are set in advance, so as to lift/lower the sowing device 3 to the work height position or the non-work height position. The lifting control includes: lifting processing for lifting the sowing device 3 from the work height position to the non-work height position when a lifting command is generated by the operation of the lifting switch; and lowering processing for lowering the sowing device 3 from the non-work height position to the work height position when a lowering command is generated by the operation of the lifting switch.

The work device control section 46D has a turning and lifting control function to determine, on the basis of detection information from the steering angle sensor, the detection information from the height sensor, and the non-work height position, which is set in advance, that the tractor V1 starts turning when detecting that the steering angle of the front wheel 11 reaches a threshold value from a smaller value than the threshold value, control the actuation of the lifting drive unit 43, and lift the sowing device 3 from the work height position to the non-work height position.

The work device control section 46D has a reverse lifting control function to control the actuation of the lifting drive unit 43 when detecting the operation of the reverse lever to the reverse position on the basis of the detection information from the reverser sensor, the detection information from the height sensor, and the non-work height position, which is set in advance, and lift the sowing device 3 from the work height position to the non-work height position.

The work device control section 46D has an automatic rolling control function to control actuation of the rolling unit 44 and maintain a rolling posture of the sowing device 3 at a control target posture, which is set in advance, on the basis of detection information from the inclination sensor and the control target posture.

As illustrated in FIG. 3, the tractor V1 includes a positioning unit 70 that measures a current position, a current direction, and the like of the tractor V1. The positioning unit 70 has: a satellite navigation device 71 that measures the current position and the current direction of the tractor V1 by using the Global Navigation Satellite System (GNSS) as an example of a Navigation Satellite System (NSS); an inertial measurement unit (IMU) 72 that has a three-axis gyroscope, a three-direction acceleration sensor, and the like to measure a posture, a direction, and the like of the tractor V1; and the like. As positioning methods using the GNSS, Differential GNSS (DGNSS), Real Time Kinematic GNSS (RTK-GNSS), and the like are available. In the present embodiment, the RTK-GNSS, which is suited for measurement of a moving body, is adopted. Accordingly, as illustrated in FIG. 1, a reference station 6 that enables positioning by the RTK-GNSS is installed at a known location in the periphery of the field.

As illustrated in FIG. 1 and FIG. 3, the tractor V1 and the reference station 6 respectively include: GNSS antennas 73, 60 that receive a radio wave transmitted from a positioning satellite 7 (see FIG. 1); communication modules 74, 61 that enable the wireless communication of information including positioning information between the tractor V1 and the reference station 6; and the like. As a result, the satellite navigation device 71 in the positioning unit 70 can measure the current position and the current direction of the tractor V1 with a high degree of accuracy on the basis of: the positioning information that is acquired when the GNSS antenna 73 on the tractor V1 side receives the radio wave from the positioning satellite 7; and the positioning information that is acquired when the GNSS antenna 60 on the reference station 6 side receives the radio wave from the positioning satellite 7. In addition, due to provision of the satellite navigation device 71 and the inertial measurement unit 72, the positioning unit 70 can measure the current position, the current direction, and posture angles (a yaw angle, the roll angle, and a pitch angle) of the tractor V1 with a high degree of accuracy.

In this tractor V1, the communication module 74 is included in the positioning unit 70 (see FIG. 3). The tractor V1 includes a communication module 76 that enables the wireless communication of respective information, including the positioning information, with the mobile communication terminal 5. The inertial measurement unit 72 in the positioning unit 70, the GNSS antenna 73, and the communication module 76 are included in an antenna unit 75 illustrated in FIG. 1. The antenna unit 75 is arranged at a center in a right-left direction of an upper portion on a front surface side of the cabin 17. A positioning target position at the time of measuring the current position and the like of the tractor V1 is set at an axle center position between the right and left rear wheels 12, which is calculated from an attachment position of the GNSS antenna 73 in the tractor V1.

Here, in the case where the wireless LAN such as Wi-Fi is adopted for the wireless communication in this tractor V1, the communication module 76 functions as a converter that converts communication information bidirectionally between the wireless LAN and the CAN.

As illustrated in FIG. 3, the mobile communication terminal 5 includes: a terminal control unit 51 having an electronic control unit, in which a microcontroller and the like are integrated, various control programs, and the like; a communication module 52 that allows the wireless communication of the information including the positioning information with the communication module 76 on the tractor V1 side; and the like. The terminal control unit 51 includes: a display control section 51A that executes control related to the display and notification on the display device 50 and the like; a target path generation section 51B that generates the target path P (see FIG. 5) for the automatic travel; a non-volatile terminal storage section 51C that stores the target path P generated by the target path generation section 51B, and the like; and the like. The terminal storage section 51C stores, as various types of information used to generate the target path P, vehicle body information on a turning radius, a work width, and the like of the tractor V1, field information that is acquired from the above-described positioning information, and the like. The field information includes plural area identification points Ap1 to Ap4 (see FIG. 5) and an area identification frame F (see FIG. 5) used to identify a travel area of the tractor V1 corresponding to a shape, size, and the like of the field. The plural area identification points Ap1 to Ap4 can be acquired by manually registering, using the GNSS, corner points and the like of the field that are necessary to identify the travel area of the tractor V1 in the field at the time when the user manually drives the tractor V1 along an outer circumferential edge of the field within the field as a registration target. The area identification frame F can be acquired when the target path generation section 51B generates line segments that connect the plural acquired area identification points Ap1 to Ap4 in an acquisition order.

In the case where the field as the registration target is the deformed field having a curved portion in at least one side of an outer shape thereof, in order to identify the travel area of the tractor V1 corresponding to the shape and size thereof, it is necessary to register plural area identification points corresponding to a shape of the curved portion in addition to the corner points.

When the user performs a touch operation on the display device 50 to select a target path generation mode, the target path generation section 51B initiates information acquisition processing for acquiring various types of information on generation of the target path P (see FIG. 5).

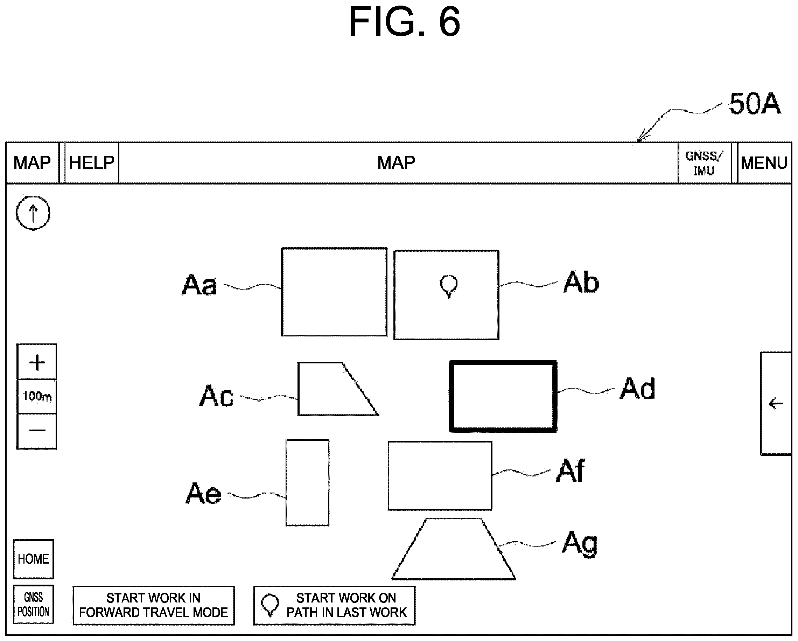

A description will hereinafter be made on the information acquisition processing by the target path generation section 51B with reference to FIGs. 6 to 10.

With the selection of the target path generation mode, the target path generation section 51B checks whether the fields Aa to Ag that have been registered exist in the vicinity of the tractor V1 on the basis of the current position of the tractor V1 that is transmitted from the vehicle-mounted control unit 46.

In the case where the fields Aa to Ag that have been registered exist, the target path generation section 51B switches a display screen of the display device 50 to a registered field display screen 50A that displays map data including the fields Aa to Ag (see FIG. 6).

In the case where none of the fields Aa to Ag that have been registered exists, the target path generation section 51B switches the display screen of the display device 50 to a new registration confirmation screen (not illustrated) on which it is checked whether to newly register the field.

In the case where the target path generation section 51B confirms that the user performs the touch operation on the new registration confirmation screen to newly register the field, the target path generation section 51B switches the display screen of the display device 50 to a field registration screen (not illustrated) that displays the map data in the vicinity of the tractor and also displays an operation procedure for registering the field, and the like. Then, when the registration of the field is completed according to the operation procedure on the field registration screen, the target path generation section 51B switches the display screen of the display device 50 to the registered field display screen 50A and displays the newly registered field as the registered field that exists in the vicinity of the tractor V1. The operating procedure, which is displayed on the field registration screen, includes an operation method for acquiring each shape-identifying point (such as the corner points Ap1 to Ap4 illustrated in FIG. 5) of an unregistered field, and the like.

In the case where the target path generation section 51B confirms that the field is not newly registered by the user's touch operation on the new registration confirmation screen, the target path generation section 51B terminates the target path generation mode.

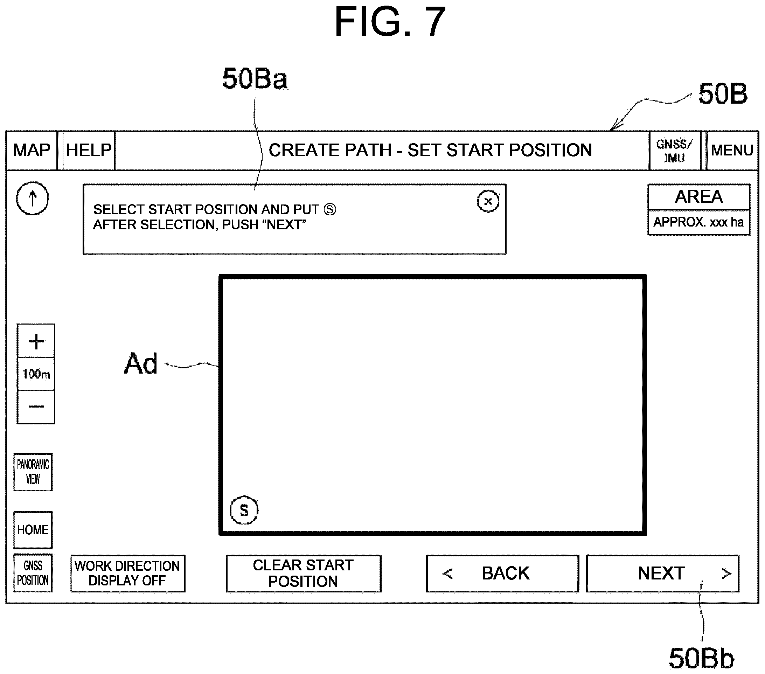

For example, in the case where the user performs the touch operation on the registered field display screen 50A illustrated in FIG. 6 to select, of the fields Aa to Ag displayed on the registered field display screen 50A, the rectangular field Ad as a work target field, the target path generation section 51B switches the display screen of the display device 50 to a selected field display screen 50B that displays the selected field Ad and the like (see FIG. 7). In the selected field display screen 50B illustrated in FIG. 7, along with the selected field Ad, a message 50Ba that urges selection of a start position S of the automatic travel and the like, a screen switching button 50Bb that commands switching to a next screen, and the like are displayed.

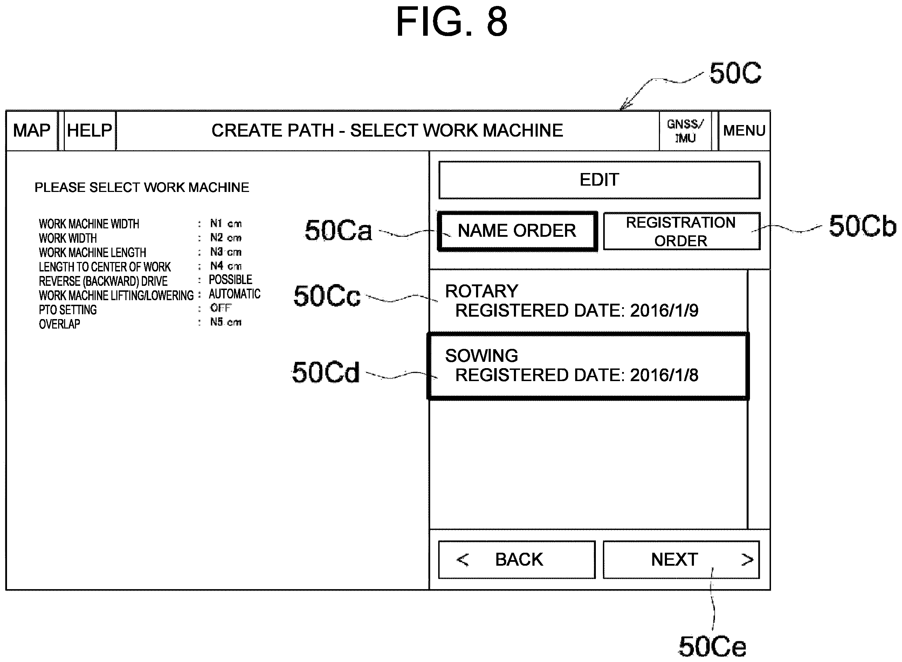

In the case where the start position S of the automatic travel is selected and the screen switching button 50Bb is operated on the selected field display screen 50B illustrated in FIG. 7, the target path generation section 51B switches the display screen of the display device 50 to a work device selection screen 50C that enables selection of the work device (see FIG. 8). In the work device selection screen 50C illustrated in FIG. 8, plural order setting buttons 50Ca, 50Cb that enable setting of an order of the work devices displayed on the work device selection screen 50C, plural work device selection buttons 50Cc, 50Cd, each of which enables selection of one of the displayed work devices, a screen switching button 50Ce that commands switching to the next screen, and the like are displayed.

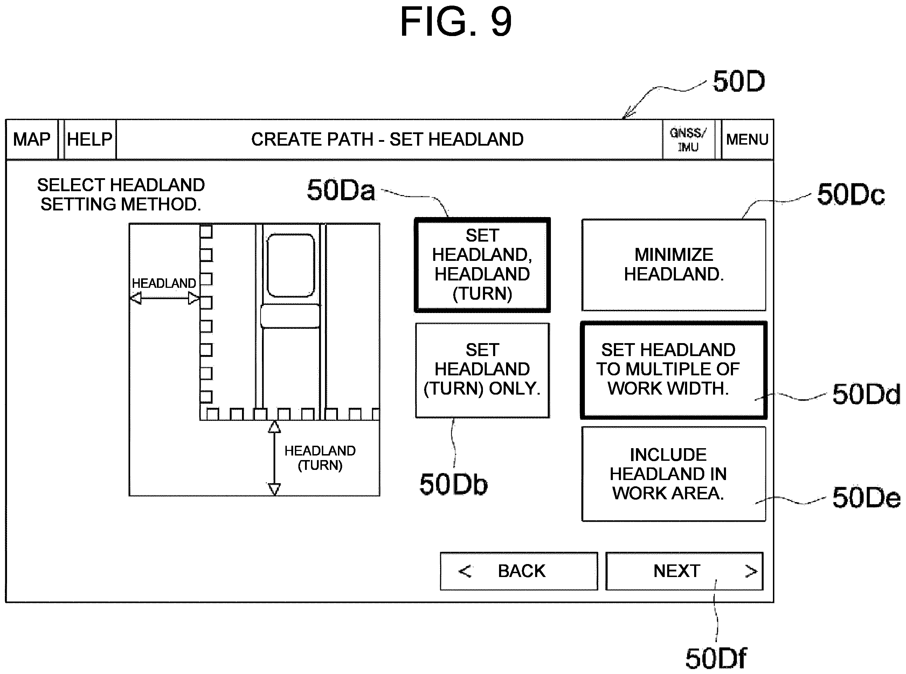

For example, in the case where the sowing device is selected and the screen switching button 50Ce is operated on the work device selection screen 50C illustrated in FIG. 8, the target path generation section 51B switches the display screen of the display device 50 to a headland area setting screen 50D that enables setting of headland areas A1, A2 (see FIG. 5) in the field Ad (see FIG. 9). In the headland area setting screen 50D illustrated in FIG. 9, a first headland area setting button 50Da for setting a pair of first headland areas A1 where the tractor V1 changes a direction with respect to the field Ad and a pair of second headland areas A2 where the tractor V1 does not change the direction, a second headland area setting button 50Db for setting only the pair of first headland areas A1 for the field Ad, a minimum setting button 50Dc for setting each of the headland areas A1, A2 to be minimized, a multiple setting button 50Dd for setting each of the headland areas A1, A2 to be a multiple of the work width, a headland area work button 50De for including each of the headland areas A1, A2 in a work area Aw (see FIG. 5), a screen switching button 50Df that commands switching to the next screen, and the like are displayed. In regard to the multiple setting button 50Dd for setting the headland area to be the multiple of the work width, a one-time setting button for setting the headland area to one time the working width, a two-time setting button for setting the headland area to two times the working width, and the like may be provided.

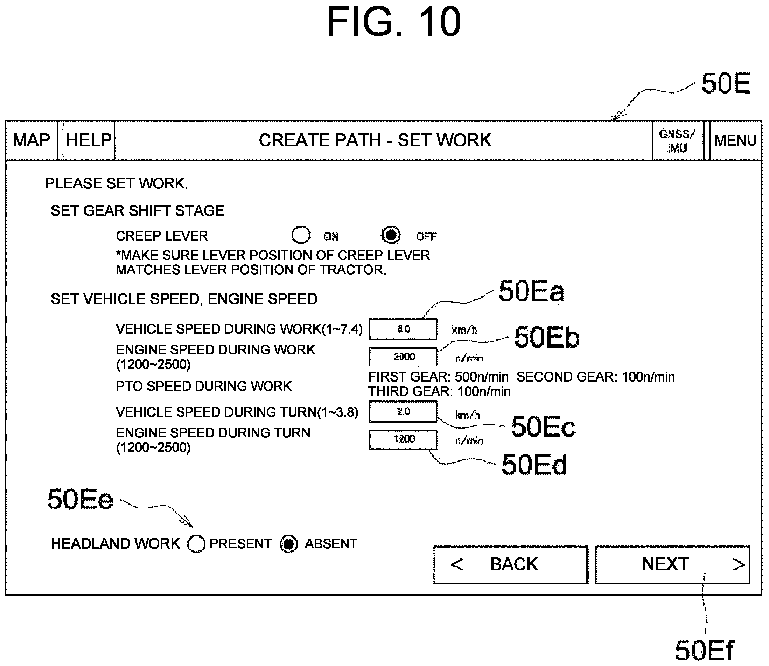

In the case where necessary setting operations are performed and then the screen switching button 50Df is operated on the headland area setting screen 50D illustrated in FIG. 9, the target path generation section 51B switches the display screen of the display device 50 to a work condition setting screen 50E that enables setting of work conditions such as the vehicle speed and the engine speed during work (see FIG. 10). In the work condition setting screen 50E illustrated in FIG. 10, plural work condition display sections 50Ea to 50Ed, each of which displays the work condition such as the vehicle speed during the work set by the user, a headland work display section 50Ee that displays presence or absence of headland work, a screen switching button 50Ef that commands switching to the next screen, and the like are displayed.

In the case where the screen switching button 50Ce is operated on the work condition setting screen 50E illustrated in FIG. 10, the target path generation section 51B terminates the information acquisition processing. Then, the target path generation section 51B executes, for the field Ad that is selected on the registered field display screen 50A illustrated in FIG. 6, target path generation processing for generating the target path P in consideration of various types of the information that are acquired in the information acquisition processing.

More specifically, for example, in the case where, for the field Ad illustrated in FIG. 5, the first headland area setting button 50Da and the multiple setting button 50Dd are operated on the headland area setting screen 50D illustrated in FIG. 9, as illustrated in FIG. 5, the target path generation section 51B secures the pair of first headland areas A1 and the pair of second headland areas A2 to be the multiples of the working width in the area identification frame F of the field Ad, and identifies a central area A3 in the area identification frame F excluding those headland areas A1, A2 as the rectangular work area Aw. Then, in the case where the start position S is selected in a lower left portion of the field Ad on selected field display screen 50B illustrated in FIG. 7 and the sowing device 3 is selected on the work device selection screen 50C illustrated in FIG. 8, as illustrated in FIG. 5, the target path generation section 51B generates, for the work area Aw in the field Ad, plural work paths P1 that are arranged in parallel with predetermined clearances therebetween according to the work width of the sowing device 3, and generates, for the pair of first headland areas A1, plural direction changing paths P2 that connect the plural work paths P1 in a travel order of the tractor V1 from the start position S.

In this way, the target path generation section 51B can set the work area Aw, generate the target path P, and the like for the field Ad illustrated in FIG. 5 on the basis of the user settings. The generated target path P is then stored in the terminal storage section 51C together with various setting contents including a seed delivery amount per unit distance by each of the delivery sections 3Bb in the sowing device 3.

In the target path P illustrated in FIG. 5, each of the work paths P1 is a path on which the tractor V1 travels automatically while performing the sowing work. Each of the direction changing paths P2 is a path on which the tractor V1 travels automatically from an end point of the previous work path P1 to a start point of the next work path P1 without performing the sowing work. The start point of each of the work paths P1 is a work start point p1 at which the tractor V1 starts the sowing work, and the end point of each of the work paths P1 is a work stop point p2 at which the tractor V1 stops the sowing work.

The target path P illustrated in FIG. 5 merely constitutes an example. Based on the vehicle body information such as the turning radii and the number of the working strips that vary by models and the like of the tractor V1 and the sowing device 3, the field information such as the shape, the size, and the like of the field that vary among the fields Aa to Ag, and the like, the target path generation section 51B can generate the various target paths P that are suited for those.

The target path P is stored in the terminal storage section 51C in association with the vehicle body information, the field information, and the like, and can be displayed on the display device 50 of the mobile communication terminal 5. The target path P includes the travel direction and a target vehicle speed of the tractor V1 in each of the work paths P1, the target vehicle speed and the front-wheel steering angle of the tractor V1 in each of the direction changing paths P2, and the like.

In response to a transmission request command from the vehicle-mounted control unit 46, the terminal control unit 51 transmits the field information, the target path P, and the like, which are stored in the terminal storage section 51C, to the vehicle-mounted control unit 46. The vehicle-mounted control unit 46 stores the received field information, the received target path P, and the like in the vehicle-mounted storage section 46G. In regard to the transmission of the target path P, for example, the terminal control unit 51 may transmit all of the target paths P from the terminal storage section 51C to the vehicle-mounted control unit 46 at once at a stage before the tractor V1 starts traveling automatically. Alternatively, the terminal control unit 51 may divide the target path P into plural pieces of divided path information per predetermined distance. Then, from the stage before the tractor V1 starts traveling automatically, every time a travel distance of the tractor V1 reaches the predetermined distance, the terminal control unit 51 may sequentially transmit the predetermined number of the divided path information, which corresponds to a travel order of the tractor V1, from the terminal storage section 51C to the vehicle-mounted control unit 46.

In a state where the user performs a manual operation to satisfy various automatic travel start conditions and a travel mode of the tractor V1 is switched to an automatic travel mode, in the case where the user performs the touch operation on the display device 50 of the mobile communication terminal 5 to command a start of the automatic travel, the automatic travel control section 46F initiates automatic travel control to cause the tractor V1 to travel automatically along the target path P in a registered work site A while acquiring the current position, the current direction, and the like of the tractor V1, which are measured by the positioning unit 70 using the above-described GNSS.

During the automatic travel control, for example, in the case where the user operates the display device 50 of the mobile communication terminal 5 to command termination of the automatic travel, or in the case where the user in the driving unit operates a manual operation tool such as the steering wheel 35 or the accelerator pedal, the automatic travel control section 46F terminates the automatic travel control, and switches the travel mode from the automatic travel mode to a manual travel mode.

The automatic travel control by the automatic travel control section 46F includes engine automatic control processing, vehicle speed automatic control processing, steering automatic control processing, work automatic control processing, and the like. In the engine automatic control processing, an automatic travel control command for the engine 13 is transmitted to the engine control section 46A. In the vehicle speed automatic control processing, an automatic travel control command for the vehicle speed and forward-reverse switching of the tractor V1 is transmitted to the transmission unit control section 46B. In the steering automatic control processing, an automatic travel control command for steering is transmitted to the steering control section 46C. In the work automatic control processing, an automatic travel control command for the work device such as the sowing device 3 is transmitted to the work device control section 46D.

In the engine automatic control processing, the automatic travel control section 46F transmits an engine speed change command and the like to the engine control section 46A. The engine speed change command commands to change the engine speed on the basis of the set speed and the like included in the target path P. The engine control section 46A executes engine speed automatic change control and the like. In the engine speed automatic change control, the engine speed is automatically changed in response to any of the various control commands for the engine 13 that are transmitted from the automatic travel control section 46F.

In the vehicle speed automatic control processing, the automatic travel control section 46F transmits a gear shift operation command, a forward-reverse switching command, and the like to the transmission unit control section 46B. The gear shift operation command commands the gear shift operation of the primary transmission 20 on the basis of the target vehicle speed included in the target path P. The forward-reverse switching command commands the forward-reverse switching operation of the forward-reverse switching device 21 on the basis of an advancing direction of the tractor V1 and the like included in the target path P. In response to the various control commands for the primary transmission 20, the forward-reverse switching device 21, and the like that are transmitted from the automatic travel control section 46F, the transmission unit control section 46B executes: automatic vehicle speed control to automatically control the actuation of the primary transmission 20; automatic forward-reverse switching control to automatically control actuation of the forward-reverse switching device 21; and the like. The automatic vehicle speed control includes automatic deceleration stop processing and the like. In the automatic deceleration stop processing, for example, in the case where the target vehicle speed included in the target path P is zero, deceleration control is executed to bring the primary transmission 20 into the zero-speed state, so as to stop the travel of the tractor V1.

In the steering automatic control processing, the automatic travel control section 46F transmits a steering command and the like to the steering control section 46C. The steering command commands steering of the right and left front wheels 11 on the basis of the front wheel steering angle included in the target path P, and the like. In response to the steering command that is transmitted from the automatic travel control section 46F, the steering control section 46C executes: automatic steering control to control actuation of the power steering unit 40 and steer the right and left front wheels 11; automatic brake turning control to control actuation of the auto brake unit 41 and actuate the brake 30 on an inner side of a turn when the steering angle of the front wheels 11 reaches the threshold value; and the like.

In the work automatic control processing, the automatic travel control section 46F transmits a work start command, a work stop command, and the like to the work device control section 46D. The work start command commands switching of the sowing device 3 to a work state on the basis of the work start point p1 included in the target path P. The work stop command commands switching of the sowing device 3 to a non-work state on the basis of the work stop point p2 included in the target path P. In response to the various control commands for the sowing device 3 that are transmitted from the automatic travel control section 46F, the work device control section 46D executes: automatic work start control to control the actuation of the lifting drive unit 43, lower the sowing device 3 to the work height position, and actuate the sowing device 3; automatic work stop control to lift the sowing device 3 to the non-work height position and stop the sowing device 3; and the like.

In the case where the work device 3 is the sowing device, the mower, or the like that is driven by the power from the PTO shaft 29, in the automatic work start control that is based on the work start command from the automatic travel control section 46F, the work device control section 46D controls the actuation of the PTO valve unit 42 and the lifting drive unit 43 to lower the work device 3 to the work height position and actuate the work device 3. Meanwhile, in the automatic work stop control that is based on the work stop command from the automatic travel control section 46F, the work device control section 46D controls the actuation of the PTO valve unit 42 and the lifting drive unit 43 to stop the work device 3 and lift the work device 3 to the non-work height position.

That is, the above-described automatic travel unit 4 includes the power steering unit 40, the auto brake unit 41, the PTO valve unit 42, the lifting drive unit 43, the rolling unit 44, the vehicle state detector 45, the vehicle-mounted control unit 46, the positioning unit 70, the communication modules 74, 76, and the like. When these components are actuated appropriately, the tractor V1 can travel automatically along the target path P with the high degree of accuracy, and tillage work by the sowing device 3 can be performed appropriately.

As illustrated in FIGs. 3 to 4, the tractor V1 includes an obstacle detection system 80 that monitors surroundings of the tractor V1 and detects an obstacle present in the surroundings. The obstacles detected by the obstacle detection system 80 are a person such as a worker and another work vehicle working in any of the fields Aa to Ag, and an existing utility pole, tree, and the like in any of the fields Aa to Ag.

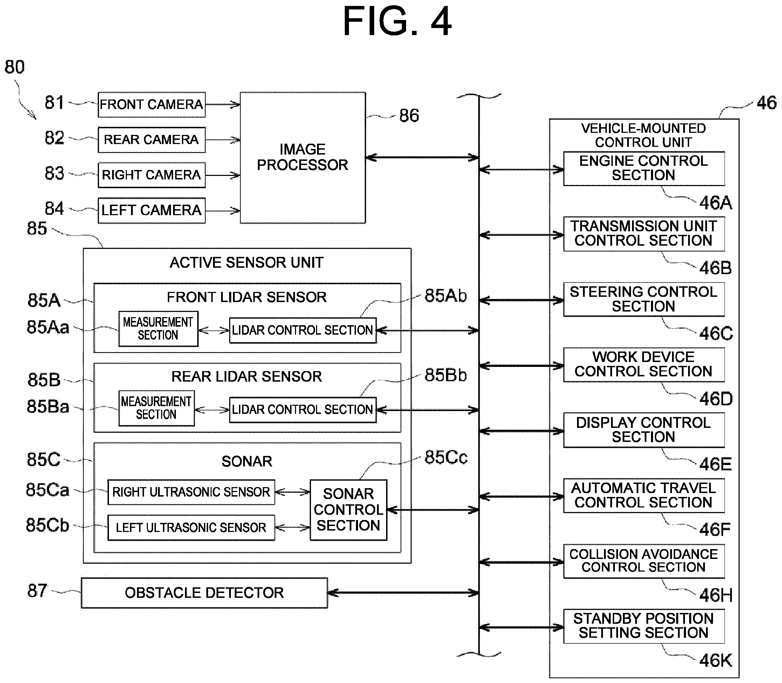

As illustrated in FIG. 1 and FIG. 4, the obstacle detection system 80 has: four cameras 81 to 84, each of which captures an image of the surroundings of the tractor V1; an active sensor unit 85 that measures a distance to a measurement target object present in the surroundings of the tractor V1; an image processor 86 that processes the image from each of the cameras 81 to 84; and an obstacle detector 87 that performs integrated processing of information from the image processor 86 and measurement information from the active sensor unit 85 to detect the obstacle. Each of the image processor 86 and the obstacle detector 87 is constructed of an electronic control unit, in which a microcontroller and the like are integrated, various control programs, and the like. The active sensor unit 85, the image processor 86, and the obstacle detector 87 are connected to the vehicle-mounted control unit 46 in a mutually communicable manner via the CAN.

The obstacle detection system 80 has, as the four cameras 81 to 84: a front camera 81, for which a predetermined range in front of the cabin 17 is set as an imaging range; a rear camera 82, for which a predetermined range behind the cabin 17 is set as the imaging range; a right camera 83, for which a predetermined range to the right of the cabin 17 is set as the imaging range; and a left camera 84, for which a predetermined range to the left of the cabin 17 is set as the imaging range.

The front camera 81 and the rear camera 82 are arranged on a right-left center line of the tractor V1. The front camera 81 is arranged at the center in the right-left direction of the upper portion on a front end side of the cabin 17 and has a front-down posture to look down the front of the tractor V1 from a diagonally upper side. In this way, a predetermined range on a front side of a vehicle body with the right-left center line of the tractor V1 being a symmetrical axis is set as the imaging range of the front camera 81. The rear camera 82 is arranged at the center in the right-left direction of the upper portion on a rear end side of the cabin 17 and has a rear-down posture to look down the rear of the tractor V1 from the diagonally upper side. In this way, a predetermined range on a rear side of the vehicle body with the right-left center line of the tractor V1 being a symmetrical axis is set as the imaging range of the rear camera 82. The right camera 83 is arranged at a center in a front-rear direction of the upper portion on a right end side of the cabin 17 and has a right-down posture to look down the right of the tractor V1 from the diagonally upper side. In this way, a predetermined range on a right side of the vehicle body is set as the imaging range of the right camera 83. The left camera 84 is arranged at the center in the front-rear direction of the upper portion on a left end side of the cabin 17 and has a left-down posture to look down the left of the tractor V1 from the diagonally upper side. In this way, a predetermined range on a left side of the vehicle body is set as the imaging range of the left camera 84.

The active sensor unit 85 has: a front lidar sensor 85A, for which predetermined range in front of the cabin 17 is set as a measurement range; a rear lidar sensor 85B, for which a predetermined range behind the cabin 17 is set as the measurement range; and a sonar 85C, for which a predetermined range to the right of the cabin 17 and a predetermined range to the left of the cabin 17 are set as the measurement ranges. The lidar sensors 85A, 85B respectively have: measurement sections 85Aa, 85Ba that use a laser beam (for example, a pulsed near-infrared laser beam) as an example of measurement light to perform measurement in the measurement ranges; lidar control sections 85Ab, 85Bb that generate distance images and the like on the basis of the measurement information from the measurement sections 85Aa, 85Ba. The sonar 85C has a right ultrasonic sensor 85Ca, a left ultrasonic sensor 85Cb, and a single sonar control section 85Cc. Each of the lidar control sections 85Ab, 85Bb and the sonar control section 85Cc is constructed by an electronic control unit in which a microcontroller or the like is integrated, various control programs, and the like. The lidar control sections 85Ab, 85Bb and the sonar control section 85Cc are connected to the obstacle detector 87 in the mutually communicable manner via the CAN.

In the lidar sensors 85A, 85B, the measurement sections 85Aa, 85Ba each measure a distance from respective one of the measurement sections 85Aa, 85Ba to each ranging point (an example of the measurement target object) by a Time Of Flight (TOF) method for measuring the distance to the ranging point on the basis of a round-trip time from arrival of the irradiated laser beam at the ranging point to return thereof. Each of the measurement sections 85Aa, 85Ba scans the laser beam vertically and horizontally at a high speed over respective one of the measurement ranges, sequentially measures the distance to the ranging point per scan angle (coordinate), and thereby performs three-dimensional measurement in respective one of the measurement ranges. Each of the measurement sections 85Aa, 85Ba sequentially measures intensity of reflected light (hereinafter referred to as reflection intensity) from each of the ranging points that are acquired when scanning the laser beam vertically and horizontally at the high speed over respective one of the measurement ranges. Each of the measurement sections 85Aa, 85Ba repeatedly measures the distance to each of the ranging points, the reflection intensity, and the like in real time in respective one of the measurement ranges. Each of the lidar control sections 85Ab, 85Bb generates the distance image and extracts a ranging point group estimated as the obstacle from the measurement information, such as the distance to each of the ranging points and the scan angle (coordinate) for each of ranging points, measured by respective one of the measurement sections 85Aa, 85Ba. Then, each of the lidar control sections 85Ab, 85Bb transmits, as measurement information on an obstacle candidate, the measurement information on the extracted ranging point group to the obstacle detector 87.

Similar to the front camera 81 and the rear camera 82, the front lidar sensor 85A and the rear lidar sensor 85B are arranged on the right-left center line of the tractor V1. The front lidar sensor 85A is arranged at the center in the right-left direction of the upper portion on the front end side of the cabin 17 and has the front-down posture to look down the front of the tractor V1 from the diagonally upper side. In this way, the front lidar sensor 85A sets a predetermined range on the front side of the vehicle body with the right-left center line of the tractor V1 being the symmetrical axis as the measurement range of the measurement section 85Aa. The rear lidar sensor 85B is arranged at the center in the right-left direction of the upper portion on the rear end side of the cabin 17 and has the rear-down posture to look down the rear of the tractor V1 from the diagonally upper side. In this way, the rear lidar sensor 85B sets a predetermined range on the rear side of the vehicle body with the right-left center line of the tractor V1 being the symmetrical axis as the measurement range of the measurement section 85Ba.

In the sonar 85C, the sonar control section 85Cc determines presence or absence of the measurement target object in the measurement range on the basis of transmission and reception of the ultrasonic waves by the right and left ultrasonic sensors 85Ca, 85Cb. The sonar control section 85Cc measures a distance from each of the right and left ultrasonic sensors 85Ca, 85Cb to the measurement target object by the Time Of Flight (TOF) method for measuring the distance to the ranging point on the basis of the round-trip time from arrival of the transmitted ultrasonic wave at the ranging point to return thereof, and transmits, to the obstacle detector 87, the distance to the measurement target object that has been measured and a direction of the measurement target object as the measurement information on the obstacle candidate.

The right ultrasonic sensor 85Ca is attached to a getting-on/off step (not illustrated) on a right side that is arranged between the right front wheel 11 and the right rear wheel 12 in the cabin 17 and has a posture facing a right outer side of the vehicle body. In this way, a predetermined range on the right outer side of the vehicle body is set as the measurement range of the right ultrasonic sensor 85Ca. The left ultrasonic sensor 85Cb is attached to the getting-on/off step 17A on a left side that is arranged between the left front wheel 11 and the left rear wheel 12 in the cabin 17 and has a posture facing a left outer side of the vehicle body. In this way, a predetermined range on the left outer side of the vehicle body is set as the measurement range of the left ultrasonic sensor 85Cb.

The image processor 86 performs image processing on the images that are sequentially transmitted from the cameras 81 to 84. The image processor 86 is subjected to learning processing for recognizing, as the obstacles, the person such as the worker and the other work vehicle working in the registered field, and the existing utility pole, tree, and the like in the registered field.

The image processor 86 synthesizes the images that are sequentially transmitted from the cameras 81 to 84 to generate an all-around image (for example, a surround view) of the tractor V1. Then, the image processor 86 transmits the generated all-around image and the images from the cameras 81 to 84 to the display control section 46E on the tractor side and the display control section 51A on the mobile communication terminal side.

In this way, the all-around image generated by an all-around image generation section 86A, the image in the travel direction of the tractor V1, and the like can be displayed on the liquid crystal monitor 37 of the tractor V1, the display device 50 of the mobile communication terminal 5, and the like. Then, by such display, the user can visually recognize a situation in the surroundings of the tractor V1 and a situation in the travel direction.

Based on the images that are sequentially transmitted from the cameras 81 to 84, the image processor 86 determines whether the obstacle that interferes with the travel of the tractor V1 exists in any of the imaging ranges of the cameras 81 to 84. In the case where the obstacle exists, coordinate calculation processing is performed to calculate the coordinates of the obstacle on the image where the obstacle exists, and convert the calculated coordinates of the obstacle into coordinates with a vehicle body coordinate origin being a reference on the basis of mounted positions, mounted angles, and the like of the cameras 81 to 84. Then, a linear distance between the converted coordinates and a preset distance calculation reference point is calculated as a distance from the distance calculation reference point to the obstacle. Then, as detection information on the obstacle, the calculated distance from the converted coordinates to the calculated obstacle is transmitted to the obstacle detector 87. On the other hand, in the case where the obstacle does not exist, a fact that the obstacle is not detected is transmitted to the obstacle detector 87.

Just as described, in the case where the obstacle exists in any of the imaging ranges of the cameras 81 to 84, the image processor 86 transmits the detection information on the obstacle to the obstacle detector 87. Accordingly, when receiving the detection information on the obstacle, the obstacle detector 87 can detect that the obstacle exists in any of the imaging ranges of the cameras 81 to 84, and can detect a position of the obstacle and the distance to the obstacle. On the other hand, in the case where the obstacle does not exist in any of the imaging ranges of the cameras 81 to 84, the image processor 86 transmits non-detection of the obstacle to the obstacle detector 87. Thus, the obstacle detector 87 can detect that the obstacle does not exist in any of the imaging ranges of the cameras 81 to 84.

In the case where the detection information on the obstacle the image processor 86 with a high degree of object determination accuracy matches the measurement information on the obstacle candidate from the active sensor unit 85 with a high degree of ranging accuracy, the obstacle detector 87 adopts a distance to the obstacle candidate that is acquired from the active sensor unit 85 as the distance to the obstacle. In this way, the obstacle detector 87 can acquire the detection information on the obstacle with the high degrees of the object determination accuracy and the ranging accuracy. The obstacle detector 87 transmits the acquired detection information on the obstacle to the vehicle-mounted control unit 46.

As illustrated in FIGs. 3 to 4, the vehicle-mounted control unit 46 includes a collision avoidance control section 46H to avoid a collision with the obstacle on the basis of the detection information from the obstacle detector 87. The collision avoidance control section 46H is constructed of an electronic control unit, in which a microcontroller and the like are integrated, various control programs, and the like. The collision avoidance control section 46H is connected to the other control sections 46A to 46F of the vehicle-mounted control unit 46, the active sensor unit 85, the image processor 86, and the obstacle detector 87 in the mutually communicable manner via the CAN.

The collision avoidance control section 46H is configured to appropriately perform collision avoidance processing for the obstacle. The collision avoidance processing includes: notification processing for acquiring the distance to the obstacle and the like on the basis of the detection information from the obstacle detector 87 and actuating a notification device such as a notification buzzer or a notification lamp provided in the tractor V1 and the mobile communication terminal 5 according to the acquired distance to the obstacle and the like; automatic deceleration processing for reducing the vehicle speed of the tractor V1; automatic travel stop processing for stopping the travel of the tractor V1; and the like.

As illustrated in FIGs. 3 to 4, the vehicle-mounted control unit 46 includes a standby position setting section 46K that sets a standby position (hereinafter referred to as a replenishment standby position) p0 (see FIG. 5) of the tractor V1 at the time of replenishing the seeds to the sowing device 3 of the tractor V1. The standby position setting section 46K is constructed of an electronic control unit, in which a microcontroller and the like are integrated, various control programs, and the like. The standby position setting section 46K is connected to the other control sections 46Ato 46F, 46H of the vehicle-mounted control unit 46 and the like in the mutually communicable manner via the CAN.

The standby position setting section 46K executes standby position acquisition control when detecting the manual travel of the tractor V1 to any of the fields Aa to Ag as the work targets on the basis of position information of the tractor V1 that is measured by the positioning unit 70 using the above-described GNSS, the information on each of the fields Aa to Ag (see FIGs. 5 to 6) that exist in the vicinity of the tractor V1, and the like.

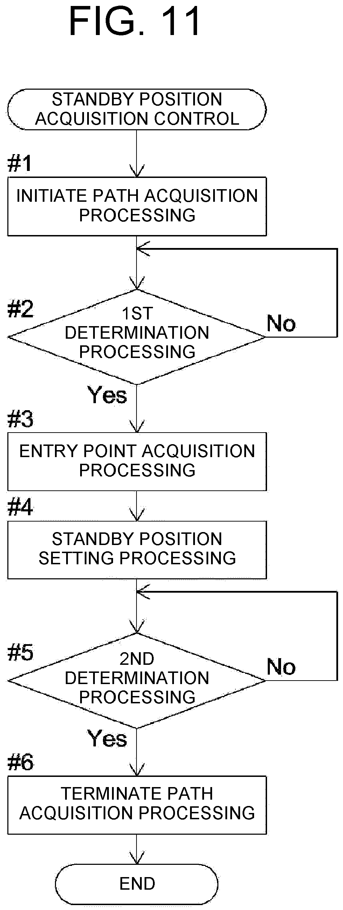

A description will hereinafter be made on the standby position acquisition control by the standby position setting section 46K for the sowing work in the field Ad illustrated in FIG. 5 with reference to a flowchart in FIG. 11.

The standby position setting section 46K initiates path acquisition processing for acquiring a manual travel path Rm of the tractor V1 from the position information of the tractor V1 measured by the positioning unit 70 in conjunction with the detection of the manual travel of the tractor V1 to the field Ad (step #1).

The standby position setting section 46K performs first determination processing for determining whether the tractor V1 has entered the field Ad from outside the field Ad on the basis of the currently-acquired manual travel path Rm and an outline OL of the field Ad that is included in information on the field Ad (step #2). More specifically, the standby position setting section 46K determines whether the currently-acquired manual travel path Rm has intersected the outline OL of the field Ad.

In the first determination processing, the standby position setting section 46K continues the path acquisition processing until the tractor V1 enters the field. Then, when the tractor V1 enters the field Ad, the standby position setting section 46K performs entry point acquisition processing for acquiring an entry point at the time when the tractor V1 has entered the field Ad from outside the field A (step #3), and performs standby position setting processing for setting the acquired entry point to the replenishment standby position p0 (step #4). More specifically, in the case where the currently-acquired manual travel path Rm intersects the outline OL of the field Ad, the standby position setting section 46K determines that the tractor V1 has entered the field Ad, sets an intersection point of the manual travel path Rm with the outline OL of the field Ad as the entry point of the tractor V1 into the field Ad, sets this entry point to the replenishment standby position p0, and stores the replenishment standby position p0 in the vehicle-mounted storage section 46G.

After performing the standby position setting processing, the standby position setting section 46K performs second determination processing for determining whether the tractor V1 has reached the start position S of the automatic travel (step #5).

In second determination processing, the standby position setting section 46K continues the path acquisition processing until the tractor V1 reaches the start position S of the automatic travel. Then, when the tractor V1 reaches the start position S of the automatic travel, the standby position setting section 46K stores the manual travel path Rm to the start position S in the vehicle-mounted storage section 46G, terminates the path acquisition processing (Step #6), and thereafter terminates the standby position acquisition control.

The automatic travel control section 46F determines whether a standby condition for causing the tractor V1 to stand by at the replenishment standby position p0 is satisfied in an automatic travel state where the automatic travel control is executed to cause the tractor V1 to travel automatically along the target path P. Then, in the case where the standby condition is satisfied, the automatic travel control section 46F executes seed replenishment movement control to cause the tractor V1 to travel automatically from the current position to the replenishment standby position p0 and to stand by at the replenishment standby position p0.

More specifically, since the tractor V1 is configured to have the sowing specification in this first embodiment, the automatic travel control section 46F is set to determine that the standby condition is satisfied in the case where the remaining amount sensors 45A (see FIG. 3) provided in the storage sections 3Ba of the sowing device 3 detect that the remaining amount of the seeds in any of the storage sections 3Ba has dropped to the seed replenishment setting value.

That is, in the automatic travel state of the tractor V1 by the automatic travel control, the automatic travel control section 46F determines whether the remaining amount of the seeds in any of the storage sections 3Ba in the sowing device 3 has dropped to the seed replenishment setting value on the basis of the detection information from each of the remaining amount sensors 45A. Then, in the case where the remaining amount of the seeds in any of the storage sections 3Ba has dropped to the seed replenishment setting value, the automatic travel control section 46F executes the seed replenishment movement control.

Here, the seed replenishment setting value in this first embodiment is set to a larger value than an amount of the seeds that is consumed when the tractor V1 travels automatically on the single work path P1 of the target path P.

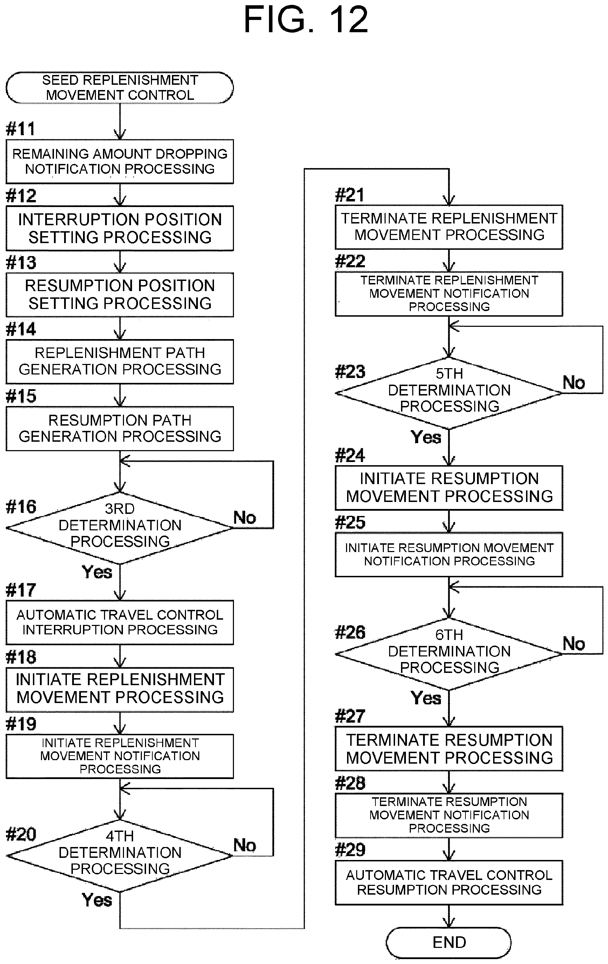

A description will hereinafter be made on the seed replenishment movement control by the automatic travel control section 46F for the sowing work in the field Ad illustrated in FIG. 5 with reference to a flowchart in FIG. 12.

In conjunction with the initiation of the seed replenishment movement control, the automatic travel control section 46F performs remaining amount dropping notification processing for notifying the user that the remaining amount of the seeds in the storage section 3Ba has dropped to the seed replenishment setting value by the display device 50 of the mobile communication terminal 5, or the like (step #11).

The automatic travel control section 46F performs interruption position setting processing and resumption position setting processing on the basis of the target path P and the current position of the tractor V1 (steps #12 to 13). In the interruption position setting processing, a work stop point (end point) p2 on the work path P1 where the tractor V1 currently travels is set as a seed replenishment interruption position p3. In the resumption position setting processing, a next work start point (start point of the next work path P1) p1 from the interruption position p3 is set as a resumption position p4 after the seed replenishment.

After setting the above positions, the automatic travel control section 46F performs replenishment path generation processing and resumption path generation processing (steps #14 to 15). In the replenishment path generation processing, the shortest replenishment movement path Pm1 from the seed replenishment interruption position p3 to the replenishment standby position p0 is generated by using untraveled paths (paths indicated by thin lines of the target path P illustrated in FIG. 5) of the target path P and the manual travel path Rm stored in the vehicle-mounted storage section 46G. In the resumption path generation processing, the shortest resumption movement path Pm2 from the replenishment standby position p0 to the resumption position p4 after the seed replenishment is generated by using the manual travel path Rm.

Although not illustrated, the resumption movement path Pm2 includes, in a path start end portion thereof, a direction changing path to change the direction of the tractor V1 from a reverse posture to a forward posture.

The automatic travel control section 46F performs third determination processing for determining whether the tractor V1 has reached the interruption position p3 (step #16). In the third determination processing, the automatic travel control section 46F continues the sowing work by the automatic travel control until the tractor V1 reaches the interruption position p3. Then, in the case where the tractor V1 reaches the interruption position p3, the automatic travel control section 46F performs automatic travel control interruption processing for interrupting the automatic travel control (step #17).

After the interruption of the automatic travel control, the automatic travel control section 46F initiates replenishment movement processing and replenishment movement notification processing (steps #18 to 19). In the replenishment movement processing, the tractor V1 travels automatically from the interruption position p3 to the replenishment standby position p0 along the replenishment movement path Pm1. In the replenishment movement notification processing, the user is notified that the tractor V1 currently travels to the replenishment standby position p0 by the display device 50 of the mobile communication terminal 5, or the like.

The automatic travel control section 46F performs fourth determination processing for determining whether the tractor V1 has reached the replenishment standby position p0 (step #20). In the fourth determination processing, the automatic travel control section 46F continues the replenishment movement processing and the replenishment movement notification processing until the tractor V1 reaches the replenishment standby position p0. Then, when the tractor V1 reaches the replenishment standby position p0, the automatic travel control section 46F terminates the replenishment movement processing and the replenishment movement notification processing and causes the tractor V1 to stand by at the replenishment standby position p0 (step #21 to 22).

The automatic travel control section 46F performs fifth determination processing for determining whether the user has performed the touch operation on the display device 50 of the mobile communication terminal 5 to command the resumption of the automatic travel of the tractor V1 by the automatic travel control while the tractor V1 stands by at the replenishment standby position p0 (step #23).

In the fifth determination processing, until the resumption of the automatic travel is commanded, the automatic travel control section 46F determines that the replenishment of the seeds to each of the storage sections 3Ba is not completed, and causes the tractor V1 to stand by at the replenishment standby position p0. Then, in the case where the resumption of the automatic travel is commanded, the automatic travel control section 46F determines that the replenishment of the seeds to each of the storage sections 3Ba is completed, and initiates: resumption movement processing for causing the tractor V1 to travel automatically from the replenishment standby position p0 to the resumption position p4 along the resumption movement path Pm2; and resumption movement notification processing for notifying the user that the tractor V1 currently travels to the resumption position p4 by the display device 50 of the mobile communication terminal 5, or the like (steps #24 to 25).

The automatic travel control section 46F performs sixth determination processing for determining whether the tractor V1 has reached the resumption position p4 (step #26). In the sixth determination processing, the automatic travel control section 46F continues the resumption movement processing and the resumption movement notification processing until the tractor V1 reaches the resumption position p4. Then, when the tractor V1 reaches the resumption position p4, the automatic travel control section 46F terminates the resumption movement processing and the resumption movement notification processing (step #27 to 28).

After terminating the resumption movement processing and the resumption movement notification processing, the automatic travel control section 46F performs automatic travel control resumption processing for resuming the automatic travel of the tractor V1 by the automatic travel control (step #29), and thereafter terminates the seed replenishment movement control.

With the configuration that has been described so far, in this automatic travel system for a work vehicle, when detecting the manual travel of the tractor V1 to any of the fields Aa to Ag as the work target, the standby position setting section 46K executes the standby position acquisition control to acquire the entry point of the tractor V1 to respective one of the fields Aa to Ag as the work target, and sets this entry point as the replenishment standby position p0. In this way, the user no longer has to set the replenishment standby position p0 for each of the fields Aa to Ag.

The entry point that is set at the replenishment standby position p0 is an entrance/exit of each of the fields Aa to Ag, by which each of the fields Aa to Ag is connected to a farm road Rf or the like where a carrier vehicle that is loaded with the replenishment seeds, and the like can be stopped. Accordingly, in the case where the seeds are replenished to the sowing device 3 of the tractor V1 that stands by at the replenishment standby position p0, the carrier vehicle or the like loaded with the seeds can be easily brought close to the tractor V1 at the replenishment standby position p0. In this way, it is possible to reduce labor required to replenish the seeds from the carrier vehicle or the like to the sowing device 3 of the tractor V1.

In addition, in this automatic travel system for a work vehicle, in the case where the remaining amount of the seeds in the sowing device 3 drops to the seed replenishment setting value, the automatic travel control section 46F executes the seed replenishment movement control to move the tractor V1 to the replenishment standby position p0 and then to stand by at the replenishment standby position p0. In this way, the user no longer has to cause the tractor V1 to travel manually from the interruption position p3 to the replenishment standby position p0.

Furthermore, in this automatic travel system for a work vehicle, in the case where the replenishment of the seeds to the sowing device 3 is completed and the user performs the touch operation on the display device 50 of the mobile communication terminal 5 to command the resumption of the automatic travel control while the tractor V1 stands by at the replenishment standby position p0, the automatic travel control section 46F moves the tractor V1 from the replenishment standby position p0 to the resumption position p4, and thereafter resumes the automatic travel of the tractor V1 along the target path P by the automatic travel control. In this way, the user no longer has to cause the tractor V1 to travel manually from the replenishment standby position p0 to the resumption position p4.

In other words, the setting of the replenishment standby position p0 in each of the fields Aa to Ag and the movement of the tractor V1 to the replenishment standby position p0 can be performed automatically and appropriately. Thus, the replenishment work for the sowing device 3 of the tractor V1 can be performed efficiently while a burden on the user is reduced.

Moreover, in this automatic travel system for a work vehicle, the interruption position p3 of the sowing work is set at the work stop point p2 of the currently traveled work path P1. Thus, even in the case where the remaining amount of the seeds in the sowing device 3 drops to the seed replenishment setting value in the middle of the work path P1, the tractor V1 can continue the sowing work to the work stop point p2 of the currently traveled work path P1 under the automatic travel control. In addition, the resumption position p4 after the seed replenishment is set at the next work start point (start point of the next work path P1) p1 from the interruption position p3. Thus, for example, compared to a case where the resumption position p4 after the seed replenishment (the interruption position p3 of the sowing work) is set at a position in the middle of the currently traveled work path P1, in the resumption movement processing for causing the tractor V1 to travel automatically to the resumption position p4, the tractor V1 no longer has to travel forward to a position near the resumption position p4, thereafter be switched to the reverse travel state, and travel reversely to the resumption position p4. As a result, the tractor V1 can travel automatically and efficiently to the resumption position p4.

In this automatic travel system for a work vehicle, in both of the replenishment movement processing and the resumption movement processing, the tractor V1 travels along the untraveled path of the target path P and the manual travel path Rm. Thus, it is possible to avoid a possibility that the tractor V1 tramples a worked area Awa of each of the fields Aa to Ag and a possibility of forming ruts, which adversely affect the sowing work, in an unworked area Awb of each of the fields Aa to Ag.

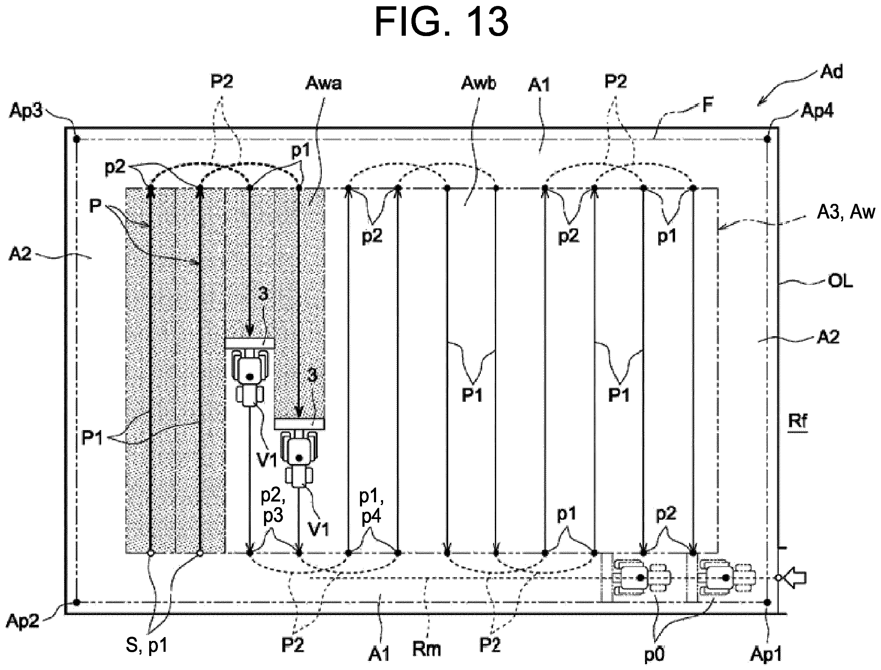

Although not illustrated, the automatic travel control section 46F includes a side-by-side travel control module that enables side-by-side work (see FIG. 13) in which the plural tractors V1 travel side-by-side along the target path P. In the case where the user performs the touch operation on the display device 50 of the mobile communication terminal 5 to command initiation of the side-by-side work in a state where various manual setting operations are performed to enable the side-by-side work, the side-by-side travel control module execute automatic side-by-side travel control to cause the plural tractors V1 to travel side-by-side along the target path P by using the GNSS, the obstacle detection system 80, the collision avoidance control section 46H, and the like described above.

In the side-by-side work, of the plural tractors V1, the standby position setting section 46K of the tractor V1 traveling in the lead sets the entry point of the tractor V1 to any of the fields Aa to Ag, which is acquired in the above-described the entry point acquisition processing, at the replenishment standby position p0. The standby position setting section 46K of each of the following tractors V1 sets a predetermined position in the field with a predetermined distance from the replenishment standby position p0 of the leading tractor V1 to the replenishment standby position p0 according to a travel order during the side-by-side work. Then, in the case where the remaining amount of the seeds in any of the sowing devices 3 of the tractors V1 drops to the seed replenishment setting value during the side-by-side travel control, the side-by-side travel control modules of the tractors V1 execute the above-described seed replenishment movement control and moves the tractors V1 from the interruption position p3 of the sowing work to the replenishment standby position p0 in the travel order during the side-by-side work in a state where a predetermined inter-vehicular distance is provided between two each of the tractors V1. Thereafter, the side-by-side travel control modules each cause the tractor V1 to stand by at the replenishment standby position p0.

In the case where, during the standby of each of the tractors V1 at the replenishment standby position p0, the replenishment of the seeds to the sowing device 3 of each of the tractors V1 is completed and the user performs the touch operation on the display device 50 of the mobile communication terminal 5 to command resumption of the side-by-side travel control, the side-by-side travel control module of each of the tractors V1 moves respective one of the tractors V1 from the replenishment standby position p0 to the resumption position p4, and thereafter resumes the automatic travel of respective one of the tractors V1 along the target path P by the side-by-side travel control.

In this way, also in the side-by-side work in which the plural (two in FIG. 13) tractors V1 travel side-by-side along the target path P as illustrated in FIG. 13, it is possible to automatically and appropriately set the replenishment standby position p0 in each of the fields Aa to Ag and move the tractor v1 to the replenishment standby position p0. Thus, it is possible to efficiently perform the replenishment work for the sowing device 3 of the tractor V1 while reducing the burden on the user.

For example, as illustrated in FIG. 13, in the case where, in the side-by-side work in which the two tractors V1 travel side-by-side along the target path P, the preceding tractor V1 is a manned machine with the user on board in the driving unit thereof and the following tractor V1 that accompanies this manned machine is an unmanned machine, the side-by-side travel control module and the standby position setting section 46K in each of the tractors V1 may perform control actuation as follows.

When detecting switching of the travel mode of the manned machine from the automatic travel mode to the manual travel mode during the side-by-side travel control, the side-by-side travel control module of the manned machine interrupts the side-by-side travel control and performs interruption point transmission processing for transmitting the interruption point to the unmanned machine. In addition, the side-by-side travel control module of the manned machine executes: path acquisition control to acquire the manual travel path Rm of the manned machine from the position information of the manned machine measured by the positioning unit 70 of the manned machine; and acquired path transmission control to transmit the acquired manual travel path Rm of the manned machine to the unmanned machine.

When receiving the interruption point of the manned machine during the side-by-side travel control, the side-by-side travel control module of the unmanned machine continues the side-by-side travel control to a point corresponding to the interruption point of the manned machine in the currently traveled work path P1, and thereafter interrupts the side-by-side travel control. Then, in the case where the side-by-side travel control module of the unmanned machine receives the manual travel path Rm of the manned machine, after the interruption of the side-by-side travel control, the side-by-side travel control module of the unmanned machine executes manual path following control to cause the unmanned machine to follow the manned machine along the manual travel path Rm in a state of being provided with the predetermined inter-vehicular distance from the manned machine. The manual path following control includes the standby position setting processing and standby stop processing. In the standby position setting processing, the standby position setting section 46K of the unmanned machine acquires the detection information from the obstacle detector 87 of the unmanned machine. Then, when detecting a stop of the manned machine on the basis of the acquired detection information, the standby position setting section 46K of the unmanned machine sets a position behind the manned vehicle with a predetermined distance from a stop position of the manned machine as a standby position p0 of the unmanned machine. In the standby stop processing, in the case where the standby position setting section 46K sets the standby position p0 of the unmanned machine, the side-by-side travel control module of the unmanned machine automatically stops the unmanned machine at the standby position p0.

In this way, for example, in the case where the user who is in the manned machine comprehends, via the display device 50 of the mobile communication terminal 5, or the like, that the remaining amount of the seeds in any of the tractors V1 has dropped to the seed replenishment setting value, and makes the manual travel to move the manned machine to the desired replenishment standby position p0 after the manned machine reaches the work stop point p2 of the currently traveled work path P1 (the interruption position p3) by the side-by-side travel control, the user who is in the manned machine interrupts the side-by-side travel control and executes the manual path following control after the manned machine reaches the work stop point p2 of the currently traveled work path P1 (the interruption position p3). As a result, as indicated by two-dot chain lines in FIG. 13, the unmanned machine can follow the manned machine along the manual travel path Rm of the manned machine. Then, when the manned machine reaches the replenishment standby position p0 and stops at the replenishment standby position p0, the unmanned machine can be stopped automatically at the standby position p0 with the predetermined distance from the stop position of the manned machine.

### Second Embodiment

A description will hereinafter be made on, as an example of the mode for carrying out the present invention, a second embodiment in which the automatic travel system for a work vehicle according to the present invention is applied to the riding rice transplanter as an example of the work vehicle with reference to the drawings.

The automatic travel system for a work vehicle exemplified in this second embodiment differs from the automatic travel system for a work vehicle exemplified in the first embodiment in terms of, in addition to the applied work vehicle, the control actuation of the standby position setting section 46K and the automatic travel control section 46F, and the like. Thus, a description will be made on a main configuration of the applied work vehicle, the control actuation of the standby position setting section 46K and the automatic travel control section 46F, and the like.

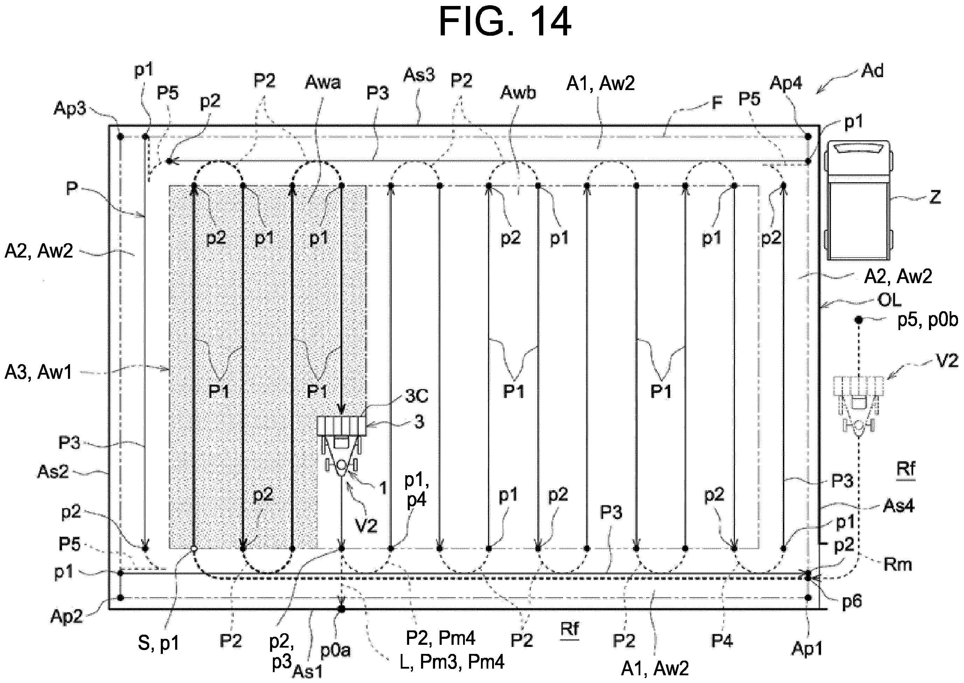

As illustrated in FIGs. 14 to 15, a riding rice transplanter V2 exemplified in this second embodiment has: a travel body 1 that corresponds to the tractor V1 exemplified in the first embodiment; and a work device for planting seedlings (hereinafter referred to as a seedling planting device) 3 that is coupled to a rear portion of the travel body 1 via a link mechanism (not illustrated). For this reason, this riding rice transplanter V2 can plant the seedlings in the field Ad as the work target by using the seedling planting device 3, which is provided in the rear portion thereof. The seedling planting device 3 is coupled to the rear portion of the travel body 1 in a liftable and rollable manner. Here, FIGs. 14 to 15 each exemplify a case where the field Ad of the fields Aa to Ag is selected as the work target. Instead of the seedling planting device 3, the work device such as the fertilizer application device or the chemical spraying device can be provided to the riding rice transplanter V2.

As illustrated in FIGs. 14 to 15, the seedling planting device 3 includes a seedling loading table 3C onto which a seedling mat as an example of the agricultural material is loaded. Although not illustrated, the seedling planting device 3 includes plural ground leveling floats, a power distribution unit, a lateral feed mechanism, vertical feed mechanisms and planting mechanisms for the number of working strips, a planting frame for supporting those, and the like.

The seedling loading table 3C is formed to load the seedling mats for the number of the working strips. The seedling loading table 3C is supported by the planting frame in a slidable manner in the right-left direction. Each of the ground leveling floats levels a mud surface of the field in conjunction with travel of a machine body during the working travel. The power distribution unit distributes the power from the engine, which is transmitted via the work transmission system, to the lateral feed mechanism and each of the planting mechanisms. The lateral feed mechanism is driven by the power from the power distribution unit and, with this driving, causes the seedling loading table 3C to reciprocate in the right-left direction at a constant stroke corresponding to a right-left width of the seedling mat. Every time the seedling loading table 3C reaches a right or left stroke end, the vertical feed mechanism is driven by the lateral feed mechanism and, with this driving, feeds each of the seedling mats, which are loaded onto the seedling loading table 3C, vertically and downwardly at a predetermined pitch. The planting mechanisms are arranged in the right-left direction at a constant interval corresponding to spacing between planting strips. Each of the planting mechanisms is configured to be of a rotary type having a pair of planting claws. Each of the planting mechanisms is driven by power from the power distribution unit and, with this driving, scrapes a predetermined amount of the seedlings from a lower end of each of the seedling mats to plant the seedlings in the field. The planting frame includes: a main member in a square pipe shape that extends in the right-left direction; a support frame that extends upward from the main member; plural transmission cases, each of which extends rearward from the main member. A right and left pair of the planting mechanisms is drivably attached to a rear end portion of each of the transmission cases. In each of the transmission cases, a transmission mechanism that transmits the power from the power distribution unit to the planting mechanism is provided.

The vehicle state detector 45 of the riding rice transplanter V2 includes, instead of the plural remaining amount sensors 45A (see FIG. 3) exemplified in the first embodiment, plural seedling remaining amount sensors 45B (indicated by two-dot chain lines in FIG. 3), each of which detects that a remaining amount of any of the seedling mats for the number of the working strips, which are loaded onto the seedling loading table 3C of the seedling planting device 3, has dropped to a seedling replenishment setting value.

FIGs. 14 to 15 each illustrates an example of the work area Aw that is identified by the target path generation section 51B for the field Ad, the target path P generated by the target path generation section 51B for the field Ad, and the like in the case where, in the state where the field Ad is selected as the work target, the start position S is selected in the lower left portion of the field Ad on the selected field display screen 50B illustrated in FIG. 7, the seedling planting device 3 is selected on the work device selection screen 50C illustrated in FIG. 8, and the first headland area setting button 50Da and the headland area work button 50De are operated on the headland area setting screen 50D illustrated in FIG. 9.

More specifically, for the field Ad illustrated in FIGs. 14 to 15, a pair of the first headland areas A1 and a pair of the second headland areas A2 are secured in the multiples of the work width in the area identification frame F of the field Ad, the central area A3 in the area identification frame F excluding those headland areas A1, A2 is identified as a rectangular first work area Aw1, and each of the headland areas A1, A2 is identified as a frame-shaped second work area Aw2. Then, for the first work area Aw1, plural first work paths P1 and plural first direction changing paths P2. The plural first work paths P1 are arranged in parallel at a predetermined interval that corresponds to the working strips (the work width) of the seedling planting device 3. The plural first direction changing paths P2 connect the plural first work paths P1 in a travel order of the riding rice transplanter V2 from the start position S. Then, for the second work area Aw2, four second work paths P3 along the area identification frame F, a single second direction changing path P4, and three third direction changing paths P5 are generated. The second direction changing path P4 connects the last first work path P1 in the first work area Aw1 to the first second work path P3 in the second work area Aw2. The third direction changing paths P5 connect the second work paths P3 in the travel order of the riding rice transplanter V2.

The target paths P illustrated in FIGs. 14 to 15 merely constitute an example. Based on the vehicle body information such as the turning radius and the working strip that vary by a model and the like of the riding rice transplanter V2, the field information such as the shape, the size, and the like of the field that vary among the fields Aa to Ag, and the like, the target path generation section 51B can generate the various target paths P suited for those.

Although not illustrated, in the selected field display screen 50B (see FIG. 7) that is displayed on the display device 50 of the mobile communication terminal 5, it is possible to perform a touch operation to select a field side (a field side As1 in FIGs. 14 to 15) that is suited to replenish the seedlings to the seedling planting device 3 of the riding rice transplanter V2 among four field sides (corresponding to outline identification lines) As1 to As4 (see FIG. 14) that identify the outline OL of the field Ad. The standby position setting section 46K has a function as a specifying section that specifies the field side As1 of the field Ad as the replenishment field side in response to the touch operation at the time when the touch operation is performed. In this way, for example, as illustrated in FIGs. 14 to 15, in the case where one of the paired first headland areas A1 where a direction of the riding rice transplanter V2 is changed is adjacent to the farm road Rf or the like where a carrier vehicle that is loaded with the replenishment seedling mats, and the like can be stopped, it is possible to specify the field side As1 of the field Ad along the one first headland area A1 as the seedling replenishment field side. For example, in the case where the utility pole, the tree, or the like that interferes with the replenishment of the seedlings exists on the field side As3 that is along one of the paired first headland areas A1 where the direction of the riding rice transplanter V2 is changed, such a field side As3 is not specified as the replenishment field side. In this way, it is possible to avoid a possibility that the field side As3 is used as the replenishment field side.

Here, the seedling replenishment setting value in this second embodiment is set to a larger value than an amount of the seedlings that is consumed when the riding rice transplanter V2 travels automatically on the two first work paths P1 of the target path P.

In the automatic travel of the riding rice transplanter V2, which is along the target path P in the first work area Aw1, by the automatic travel control of the automatic travel control section 46F, in the case where the standby position setting section 46K detects that the remaining amount of any of the seedling mats for the number of the working strips, which are loaded onto the seedling loading table 3C of the seedling planting device 3, has dropped to the seedling replenishment setting value on the basis of the detection information from each of the seedling remaining amount sensors 45B, the standby position setting section 46K executes the standby position acquisition control.

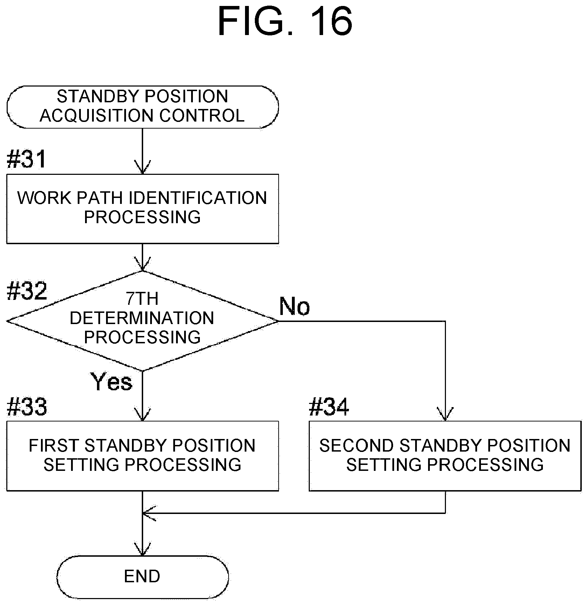

A description will hereinafter be made on the standby position acquisition control by the standby position setting section 46K for seedling planting work in the field Ad illustrated in FIG. 14 with reference to a flowchart in FIG. 16.

The standby position setting section 46K performs work path identification processing for identifying the first work path P1 where the riding rice transplanter V2 currently travels on the basis of the target path P and the current position of the riding rice transplanter V2 in conjunction with the detection that the remaining amount of any of the seedling mats for the number of the working strips, which are loaded onto the seedling loading table 3C, has dropped to the seedling replenishment setting value (step #31).

The standby position setting section 46K performs seventh judgment processing for determining whether the travel direction of the riding rice transplanter V2 on the identified first work path (hereinafter referred to as the identified work path) P1 is a direction to approach the seedling replenishment field side As1 that is selected by the user's touch operation on the selected field display screen 50B (step #32).

In the case where the travel direction of the riding rice transplanter V2 is the direction to approach the seedling replenishment field side As1 in the seventh judgment processing, the standby position setting section 46K performs first standby position setting processing for setting an intersection point of an extension line L of the identified work path P1 with the seedling replenishment field side As1 to a replenishment standby position p0a on the basis of the identified work path P1 and the seedling replenishment field side As1 (step #33), and thereafter terminates the standby position acquisition control.

In the case where the travel direction of the riding rice transplanter V2 is not the direction to approach the seedling replenishment field side As1 in the seventh judgment processing, the standby position setting section 46K performs second standby position setting processing for setting an intersection point of the extension line L of the first work path (hereinafter referred to as a next process work path) P1, on which the riding rice transplanter V2 travels after the identified work path P1, with the seedling replenishment field side As1 as the replenishment standby position p0a on the basis of the next process work path P1 and the seedling replenishment field side As1 (step #34), and thereafter terminates the standby position acquisition control.

In the automatic travel of the riding rice transplanter V2, which is along the target path P in the first work area Aw1, by the automatic travel control, the automatic travel control section 46F determines whether a first standby condition to cause the riding rice transplanter V2 to stand by at the replenishment standby position p0a is satisfied. In the case where the first standby condition is satisfied, the automatic travel control section 46F executes seedling replenishment movement control to cause the riding rice transplanter V2 to travel automatically from the current position to the replenishment standby position p0a and to stand by at the replenishment standby position p0a.

More specifically, in this second embodiment, the standby position setting section 46K sets the replenishment standby position p0a in the case where the work vehicle is the riding rice transplanter V2 and any of the plural seedling remaining amount sensors 45B provided to the seedling loading table 3C detects that the remaining amount of any of the seedling mats for the number of the working strips, which are loaded onto the seedling loading table 3C, has dropped to the seedling replenishment setting value. Accordingly, the automatic travel control section 46F is set to determine that the first standby condition is satisfied in the case where the standby position setting section 46K sets the replenishment standby position p0a.

In other words, in the automatic travel of the riding rice transplanter V2 by the automatic travel control, the automatic travel control section 46F determines whether the standby position setting section 46K has set the replenishment standby position p0a. In the case where the replenishment standby position p0a has been set, the automatic travel control section 46F executes the seedling replenishment movement control.

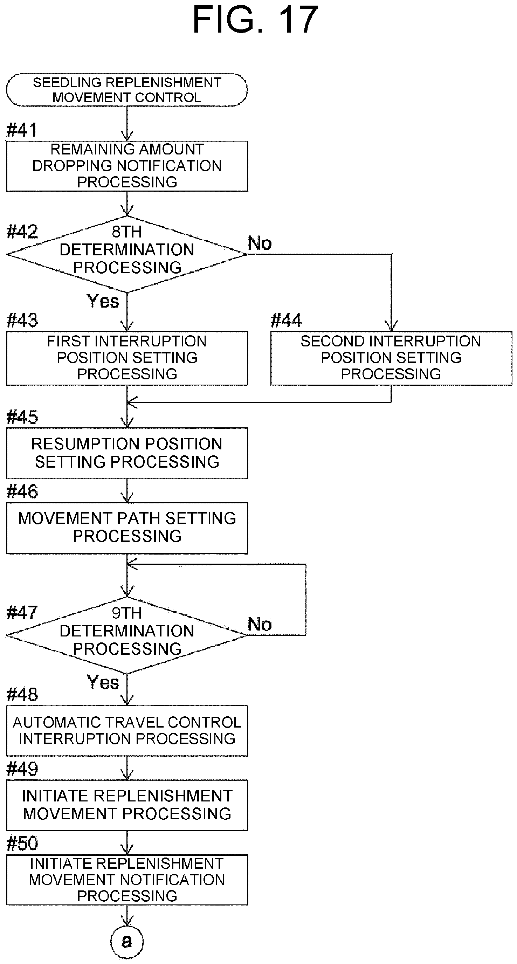

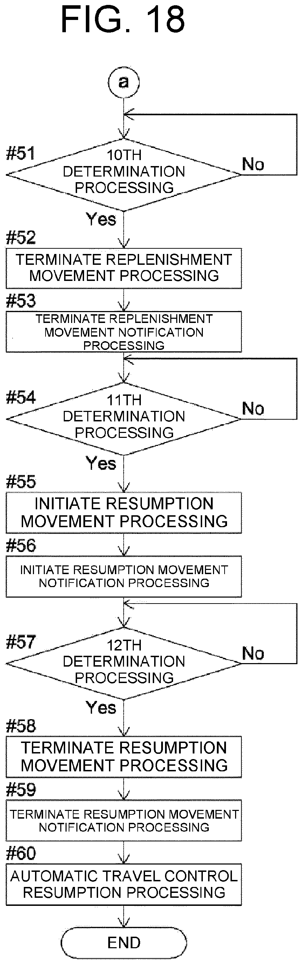

A description will hereinafter be made on the seedling replenishment movement control by the automatic travel control section 46F for the seedling planting work in the field Ad illustrated in FIG. 14 with reference to a flowchart in FIGs. 17 to 18.

In conjunction with the initiation of the seedling replenishment movement control, the automatic travel control section 46F performs the remaining amount dropping notification processing for notifying the user that the remaining amount of the seedling mat loaded onto the seedling loading table 3C has dropped to the seedling replenishment setting value by the display device 50 of the mobile communication terminal 5, or the like (step #41).

The automatic travel control section 46F performs eighth determination processing for determining whether the replenishment standby position p0a, which is set by the standby position setting section 46K, is the intersection point of the extension line L of the identified work path P1 with the seedling replenishment field side As1 (step #42).

In the case where the replenishment standby position p0a is the intersection point of the extension line L of the identified work path P1 with the seedling replenishment field side As1 in the eighth determination processing, the automatic travel control section 46F performs first interruption position setting processing for setting the work stop point (end point) p2 of the identified work path P1 to the seedling replenishment interruption position p3 on the basis of the target path P and the current position of the riding rice transplanter V2 (step #43).

In the case where the automatic travel control section 46F determines that the replenishment standby position p0a is not the intersection point of the extension line L of the identified work path P1 with the seedling replenishment field side As1 in the eighth determination processing, the automatic travel control section 46F performs second interruption position setting processing for setting the work stop point (end point) p2 of the next process work path P1 to the seedling replenishment interruption position p3 on the basis of the target path P and the current position of the riding rice transplanter V2 (step #44).

After setting the seedling replenishment interruption position p3, the automatic travel control section 46F performs the resumption position setting processing and movement path setting processing. In the resumption position setting processing, the next work start point (start point of the next work path P1) p1 with respect to the interruption position p3 is set to the resumption position p4 after the replenishment of the seedlings. In the movement path setting processing, the extension line L of the identified work path P1 from the seedling replenishment interruption position p3 to the replenishment standby position p0a or the extension line L of the next process work path P1 is set as a replenishment movement path Pm3, and this replenishment movement path Pm3 and the first direction changing path P2 from the interruption position p3 to the resumption position p4 are set as a resumption movement path Pm4 (steps #45 to 46).

The automatic travel control section 46F performs ninth determination processing for determining whether the riding rice transplanter V2 has reached the interruption position p3 (step #47). In the ninth determination processing, the automatic travel control section 46F continues the seedling planting work under the automatic travel control until the riding rice transplanter V2 reaches the interruption position p3. Then, when the riding rice transplanter V2 reaches the interruption position p3, the automatic travel control section 46F performs the automatic travel control interruption processing for interrupting the automatic travel control (step #48).

After the interruption of the automatic travel control, the automatic travel control section 46F initiates the replenishment movement processing and the replenishment movement notification processing (steps #49 to 50). In the replenishment movement processing, the riding rice transplanter V2 travels automatically from the interruption position p3 to the replenishment standby position p0a along the replenishment movement path Pm3. In the replenishment movement notification processing, the user is notified that the riding rice transplanter V2 currently travels to the replenishment standby position p0a by the display device 50 of the mobile communication terminal 5, or the like.

The automatic travel control section 46F performs tenth determination processing for determining whether the riding rice transplanter V2 has reached the replenishment standby position p0a (step #51). In the tenth determination processing, the automatic travel control section 46F continues the replenishment movement processing and the replenishment movement notification processing until the riding rice transplanter V2 reaches the replenishment standby position p0a. When the riding rice transplanter V2 reaches the replenishment standby position p0a, the automatic travel control section 46F terminates the replenishment movement processing and the replenishment movement notification processing, and causes the riding rice transplanter V2 to stand by at the replenishment standby position p0a (steps #52 to 53).

The automatic travel control section 46F performs eleventh determination processing for determining whether the user has performed the touch operation on the display device 50 of the mobile communication terminal 5 to command the resumption of the automatic travel of the riding rice transplanter V2 by the automatic travel control while the riding rice transplanter V2 stands by at the replenishment standby position p0a (step #54).

In the eleventh determination processing, the automatic travel control section 46F initiates the resumption movement processing and the resumption movement notification processing (steps #55 to 56). In the resumption movement processing, until the resumption of the automatic travel is commanded, it is determined that the replenishment of the seeds to each of the storage sections 3Ba is not completed, and the riding rice transplanter V2 stands by at the replenishment standby position p0a. Then, when the resumption of the automatic travel is commanded, it is determined that the replenishment of the seeds to each of the storage sections 3Ba is completed, and the riding rice transplanter V2 travels automatically from the replenishment standby position p0a to the resumption position p4 along the resumption movement path Pm4. In the resumption movement notification processing, the user is notified that the riding rice transplanter V2 currently travels to the resumption position p4 by the display device 50 of the mobile communication terminal 5, or the like.

The automatic travel control section 46F performs twelfth determination processing for determining whether the riding rice transplanter V2 has reached the resumption position p4 (step #57). In the twelfth determination processing, the automatic travel control section 46F continues the resumption movement processing and the resumption movement notification processing until the riding rice transplanter V2 reaches the resumption position p4. Then, when the riding rice transplanter V2 reaches the resumption position p4, the automatic travel control section 46F terminates the resumption movement processing and the resumption movement notification processing (steps #58 to 59).

After terminating the resumption movement processing and the resumption movement notification processing, the automatic travel control section 46F performs the automatic travel control resumption processing for resuming the automatic travel of the riding rice transplanter V2 by the automatic travel control (step #60), and thereafter terminates the seedling replenishment movement control.

With the configuration that has been described so far, in this automatic travel system for a work vehicle, in the case where the standby position setting section 46K detects that the remaining amount of the seedling mat in the seedling planting device 3 has dropped to the seedling replenishment setting value, the standby position setting section 46K executes the standby position acquisition control to acquire the intersection point of the seedling replenishment field side As1 in any of the fields Aa to Ag as the work target with the extension line L of the identified work path P1 or the extension line L of the next process work path P1 and to set this intersection point as the replenishment standby position p0a. In this way, the user no longer has to set the replenishment standby position p0a for each of the fields Aa to Ag.

The replenishment standby position p0a is the intersection point of the seedling replenishment field side As1, which is adjacent to the farm road Rf where the carrier vehicle loaded with the replenishment seedling mats, and the like can be stopped, with the extension line L of the identified work path P1 or the extension line L of the next process work path P1. Accordingly, in the case where the seedling mats are replenished to the seedling planting device 3 of the riding rice transplanter V2 that stands by at the replenishment standby position p0a, the carrier vehicle loaded with the seedling mats, or the like can be easily brought close to the riding rice transplanter V2 at the replenishment standby position p0a. In this way, it is possible to reduce labor required to replenish the seedlings from the carrier vehicle or the like to the seedling planting device 3 of the riding rice transplanter V2.

In addition, in this automatic travel system for a work vehicle, in the case where the remaining amount of the seedling mat in the seedling planting device 3 drops to the seedling replenishment setting value and the standby position setting section 46K sets the replenishment standby position p0a, the automatic travel control section 46F executes the seedling replenishment movement control to move the riding rice transplanter V2 to the replenishment standby position p0a and to thereafter cause the riding rice transplanter V2 to stand by at the replenishment standby position p0a. In this way, the user no longer has to cause the riding rice transplanter V2 to travel manually from the interruption position p3 to the replenishment standby position p0a.

Furthermore, in this automatic travel system for a work vehicle, in the case where the replenishment of the seedling mats to the seedling loading table 3C of the seedling planting device 3 is completed and the user performs the touch operation on the display device 50 of the mobile communication terminal 5 to command the resumption of the automatic travel of the riding rice transplanter V2 by the automatic travel control while the riding rice transplanter V2 stands by at the replenishment standby position p0a, the automatic travel control section 46F moves the riding rice transplanter V2 from the replenishment standby position p0a to the resumption position p4, and thereafter resumes the automatic travel of the riding rice transplanter V2 along the target path P by the automatic travel control. In this way, the user no longer has to cause the riding rice transplanter V2 to travel manually from the replenishment standby position p0a to the resumption position p4.

In other words, the setting of the replenishment standby position p0a in each of the fields Aa to Ag and the movement of the riding rice transplanter V2 to the replenishment standby position p0a can be performed automatically and appropriately. Thus, the replenishment work for the seedling planting device 3 of the riding rice transplanter V2 can be performed efficiently while the burden on the user is reduced.

Moreover, in this automatic travel system for a work vehicle, the interruption position p3 in the seedling planting work is set at the work stop point p2 on the identified work path P1 or the next process work path P1. Thus, even in the case where the remaining amount of the seedling mat in the seedling planting device 3 drops to the seedling replenishment setting value in the middle of the work path P1, the riding rice transplanter V2 can continue the seedling planting work to the work stop point p2 on the identified work path P1 or the next process work path P1 under the automatic travel control. In addition, the resumption position p4 after the replenishment of the seedlings is set at the next work start point (start point of the next work path P1) p1 from the interruption position p3. Thus, for example, compared to a case where the resumption position p4 after the replenishment of the seedlings (the interruption position p3 in the seedling planting work) is set at a position in the middle of the identified work path P1, in the resumption movement processing for causing the riding rice transplanter V2 to travel automatically to the resumption position p4, the riding rice transplanter V2 no longer has to travel forward to a position near the resumption position p4, thereafter be switched to the reverse travel state, and travel reversely to the resumption position p4. As a result, the riding rice transplanter V2 can travel automatically and efficiently to the resumption position p4.

The interruption position p3 in the seedling planting work is the work stop point p2 on the identified work path P1 or the next process work path P1 near the seedling replenishment field side As1. The resumption position p4 after the replenishment of the seedlings is the next work start point p1 that is adjacent to the interruption position p3 near the seedling replenishment field side As1. Accordingly, it is possible to shorten the replenishment movement path Pm3 from the interruption position p3 to the replenishment standby position p0a and the resumption movement path Pm4 from the replenishment standby position p0a to the resumption position p4. As a result, it is possible to reduce the time required for the movement of the riding rice transplanter V2 from the interruption position p3 to the replenishment standby position p0a and the movement thereof from the replenishment standby position p0a to the resumption position p4.

In this automatic travel system for a work vehicle, in both of the replenishment movement processing and the resumption movement processing, the riding rice transplanter V2 travels along the extension line L of the identified work path P1 or the next process work path P1 and the first direction changing path P2. Thus, it is possible to avoid a possibility that the riding rice transplanter V2 tramples the worked area Awa of each of the fields Aa to Ag and a possibility of forming the ruts, which adversely affect the seedling planting work, in the unworked area Awb of each of the fields Aa to Ag.

In the case where the user performs the touch operation on a path acquisition button (not illustrated) that is displayed on the display device 50 of the mobile communication terminal 5, the standby position setting section 46K executes off-field movement path acquisition control to acquire, as an off-field movement path Pm5 (see FIGs. 14 to 15), the manual travel path Rm of the riding rice transplanter V2 outside any of the fields Aa to Ag.

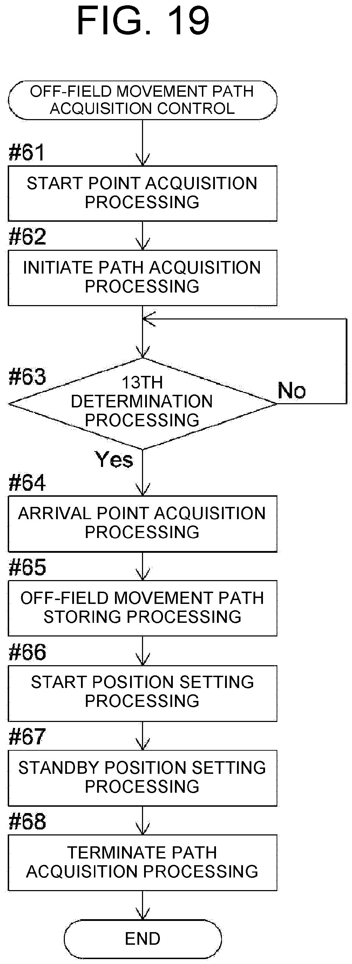

A description will hereinafter be made on the off-field movement path acquisition control for the field Ad illustrated in FIGs. 14 to 15 by the standby position setting section 46K for the sowing work in the field Ad illustrated in FIG. 5 with reference to a flowchart in FIG. 19.

In conjunction with the user's touch operation on the path acquisition button, the standby position setting section 46K performs start point acquisition processing for acquiring a manual travel start point p5 of the riding rice transplanter V2 with respect to the field Ad from the position information of the riding rice transplanter V2 measured by the positioning unit 70 (step #61). Thereafter, the standby position setting section 46K initiates the path acquisition processing for acquiring the manual travel path Rm of the riding rice transplanter V2 (step #62).

The standby position setting section 46K performs thirteenth determination processing for determining whether the riding rice transplanter V2 has reached the travel area in the field Ad on the basis of the currently-acquired manual travel path Rm and the area identification frame F of the field Ad included in the information on the field Ad (step #63). More specifically, the standby position setting section 46K determines whether the currently-acquired manual travel path Rm has contacted the area identification frame F of the field Ad.

In the thirteenth determination processing, the standby position setting section 46K continues the path acquisition processing until the riding rice transplanter V2 reaches the travel area in the field Ad. Then, when the riding rice transplanter V2 reaches the travel area in the field Ad, the standby position setting section 46K performs arrival point acquisition processing for acquiring an arrival point p6 thereof (step #64).

More specifically, in the case where the currently-acquired manual travel path Rm comes into contact with the area identification frame F of the field Ad, it is determined that the riding rice transplanter V2 has reached the travel area in the field Ad. Then, a contact point between the manual travel path Rm and the area identification frame F is set as the arrival point p6 of the riding rice transplanter V2 at the travel area in the field Ad.

After acquiring the arrival point p6, the standby position setting section 46K performs off-field movement path storing processing, start position setting processing, and the standby position setting processing (steps #65 to 67). In the off-field movement path storing processing, the manual travel path Rm from the manual travel start point p5 to the arrival point p6 is set as the off-field movement path Pm5 and stored in the vehicle-mounted storage section 46G. In the start position setting processing, the arrival point p6 is set as a travel start position at the time when the riding rice transplanter V2 travels automatically along the off-field movement path Pm5. In the standby position setting processing, the manual travel start point p5 is set as a standby position (hereinafter referred to as an off-field standby position) pOb of the riding rice transplanter V2 outside the field Ad. Thereafter, the standby position setting section 46K terminates the path acquisition processing (step #68), and terminates the off-field movement path acquisition control.

In conjunction with the termination of the automatic travel control to cause the riding rice transplanter V2 to travel automatically along the target path P in the field Ad illustrated in FIGs. 14 to 15, the automatic travel control section 46F determines whether a second standby condition to cause the riding rice transplanter V2 to stand by at an off-field standby position pOb is satisfied. Then, in the case where the second standby condition is satisfied, the automatic travel control section 46F executes off-field automatic travel control to cause the riding rice transplanter V2 to travel automatically from the current position (the end point of the target path P) to the off-field standby position pOb and to stand by at the off-field standby position p0b.

More specifically, the automatic travel control section 46F is set to determine that the second standby condition is satisfied in the case where the standby position setting section 46K has set the off-field movement path Pm5, the travel start position p6, and the off-field standby position pOb at a stage where the riding rice transplanter V2 reaches the end point of the target path P.

In other words, at the stage where the riding rice transplanter V2 reaches the end point of the target path P, the automatic travel control section 46F determines whether the standby position setting section 46K has set the off-field movement path Pm5, the travel start position p6, and the off-field standby position p0b. Then, in the case where the standby position setting section 46K has set the off-field movement path Pm5, the travel start position p6, and the off-field standby position p0b, the automatic travel control section 46F executes the off-field automatic travel control.

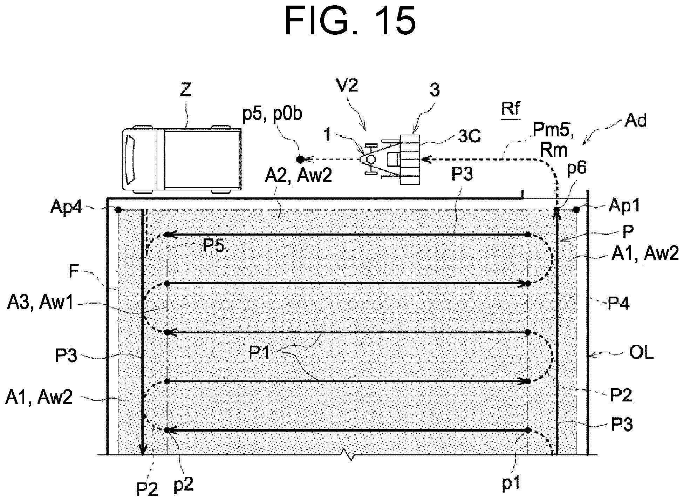

In this way, after the riding rice transplanter V2 finishes the seedling planting work in the field Ad and reaches the end point of the target path P, as illustrated in FIG. 15, the riding rice transplanter V2 can travel automatically to the off-field standby position pOb along the off-field movement path Pm5. Then, upon arrival to the off-field standby position p0b, the riding rice transplanter V2 can stand by at the off-field standby position p0b.

As a result, as illustrated in FIGs. 14 to 15, in the case where the off-field standby position pOb is a loading/unloading position for a carrier vehicle Z that transports the riding rice transplanter V2, it is possible to eliminate time and effort for causing the riding rice transplanter V2 to travel manually from the field Ad to the loading/unloading position. Alternatively, in the case where the off-field standby position pOb is an installation position of a barn in which the riding rice transplanter V2 is stored, or the like, it is possible to eliminate time and effort for causing the riding rice transplanter V2 to travel manually from the field Ad to the barn. Furthermore, in the case where the off-field standby position pOb is a position near the registered field to be worked after the field Ad, it is possible to eliminate time and effort for causing the riding rice transplanter V2 to travel manually from the field Ad to a position in the vicinity of the next registered field and also to improve work efficiency.

In the second embodiment, such an aspect has been exemplified that the standby position setting section 46K executes the off-field movement path acquisition control in the case where the user performs the touch operation on the path acquisition button that is displayed on the display device 50 of the mobile communication terminal 5. However, for example, in the case where the off-field standby position pOb is the loading/unloading position for the carrier vehicle Z that transports the riding rice transplanter V2, the standby position setting section 46K may initiate the off-field movement path acquisition control when the gear shift operation is performed to switch a gear shift state of the transmission unit 15 in the riding rice transplanter V2 from the ultra-low speed stage for unloading to the high-speed stage for travel. Meanwhile, for example, in the case where the off-field standby position pOb is the installation position of the barn, which stores the riding rice transplanter V2, or the like, the standby position setting section 46K may initiate the off-field movement path acquisition control when a power-on operation of the riding rice transplanter V2 is performed.

### Third Embodiment

A description will hereinafter be made on, as an example of the mode for carrying out the present invention, a third embodiment in which the automatic travel system for a work vehicle according to the present invention is applied to the combine harvester as an example of the work vehicle with reference to the drawings.

The automatic travel system for a work vehicle exemplified in this third embodiment differs from the automatic travel systems for a work vehicle exemplified in the first embodiment and the second embodiment in terms of, in addition to the applied work vehicle, the control actuation of the standby position setting section 46K and the automatic travel control section 46F, and the like. Thus, a description will be made on a main configuration of the applied work vehicle, the control actuation of the standby position setting section 46K and the automatic travel control section 46F, and the like.

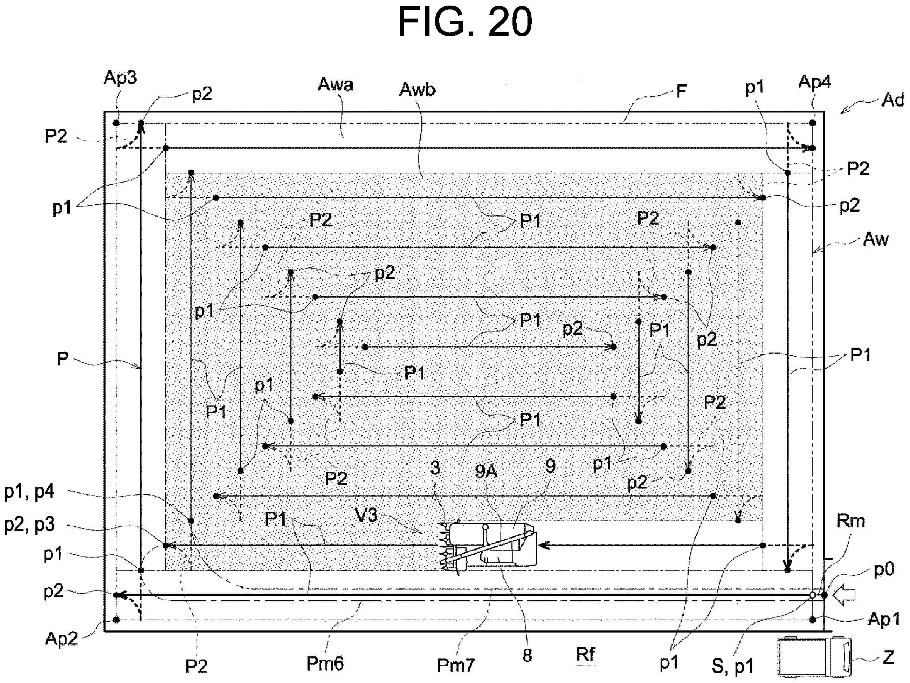

As illustrated in FIGs. 20 to 21, the combine harvester V3 exemplified in this third embodiment has a travel body (not illustrated) with a full crawler specification that corresponds to the tractor V1 exemplified in the first embodiment and the travel body 1 exemplified in the second embodiment and that is equipped with: a work device for harvesting grain culms (hereinafter referred to as a harvesting and conveying device) 3; a threshing device 8 that performs threshing and sorting processing on the grain culms harvested and conveyed by the harvesting and conveying device 3; a grain tank 9 that stores grain from the threshing device 8; and the like. The grain tank 9 includes a grain discharger 9A of a screw conveyance type that discharges the grain stored therein to a platform of the carrier vehicle Z or the like outside the machine. In this way, this combine harvester V3 can harvest the grain culms, which are planted in the field Ad as the work target, by the harvesting and conveying device 3 provided in a front portion thereof. Then, the grain that is obtained by subjecting the harvested grain culms to the threshing and sorting processing can be stored in the grain tank 9.

Here, FIGs. 20 to 21 each exemplify a case where the field Ad of the fields Aa to Ag is selected as the work target.

The vehicle state detector 45 of the combine harvester V3 includes, instead of the plural remaining amount sensors 45A (see FIG. 3) exemplified in the first embodiment and the plural seedling remaining amount sensors 45B (see FIG. 3) exemplified in the second embodiment, a full sensor 45C (indicated by two-dot chain lines in FIG. 3) detecting that an amount of the grain stored in the grain tank 9 has reached a grain discharge setting value.

FIGs. 20 to 21 each illustrate an example of the target path P and the like. The target path P is generated in the field Ad by the target path generation section 51B in the case where, in the state where the field Ad is selected as the work target, the harvesting and conveying device 3 is selected on the work device selection screen 50C illustrated in FIG. 8.

More specifically, for the field Ad illustrated in FIGs. 20 to 21, an area within the area identification frame F of the field Ad is identified as the rectangular work area Aw, and the target path P for rotary harvesting is generated for this work area Aw. This target path P includes: the plural work paths P1 that are arranged in parallel with field sides of the field Ad at predetermined intervals corresponding to the number of the working strips (the work width) of the harvesting and conveying device 3; and the plural direction changing paths P2 that connect the plural work paths P1 in a travel order of the combine harvester V3 from the start position S.

The target paths P illustrated in FIGs. 20 to 21 merely constitute an example. Based on the vehicle body information such as the turning radius and the working strip that vary by a model and the like of the combine harvester V3, the field information such as the shape, the size, and the like of the field that vary among the fields Aa to Ag, and the like, the target path generation section 51B can generate the various target paths P suited for those.

The standby position setting section 46K executes the standby position acquisition control exemplified in the first embodiment in the case where the user performs the touch operation on a standby position setting button (not illustrated) that is displayed on the display device 50 of the mobile communication terminal 5. In this way, an entry point of the combine harvester V3 to the field Ad is set to the standby position (hereinafter referred to as a discharge standby position) p0 (see FIG. 20) of the combine harvester V3 at the time of discharging the grain stored in the grain tank 9 of the combine harvester V3 to the outside of the machine. Together with the manual travel path Rm (see FIG. 20) from this discharge standby position p0 to the start position S of the automatic travel, the discharge standby position p0 is stored in the vehicle-mounted storage section 46G.

The automatic travel control section 46F determines whether a standby condition for causing the combine harvester V3 to stand by at the discharge standby position p0 is satisfied in the automatic travel state where the automatic travel control is executed to cause the combine harvester V3 to travel automatically along the target path P. Then, in the case where the standby condition is satisfied, the automatic travel control section 46F executes grain discharge movement control to cause the combine harvester V3 to travel automatically from the current position to the discharge standby position p0 and to stand by at the discharge standby position p0.

More specifically, since the work vehicle is the combine harvester V3 in this third embodiment, the automatic travel control section 46F is set to determine that the standby condition is satisfied in the case where the full sensor 45C provided to the grain tank 9 detects that the amount of the grain stored in the grain tank 9 has reached the grain discharge setting value.

In other words, in the automatic travel state of the combine harvester V3 under the automatic travel control, the automatic travel control section 46F determines whether the amount of the grain stored in the grain tank 9 has reached the grain discharge setting value on the basis of detection information from the full sensor 45C. Then, in the case where the storage amount has reached the grain discharge setting value, the automatic travel control section 46F executes the grain discharge movement control.

Here, the grain discharge setting value in this third embodiment is set to such a value that the grain obtained during the automatic travel of the combine harvester V3 on the single work path P1 of the target path P can be stored in the grain tank 9.

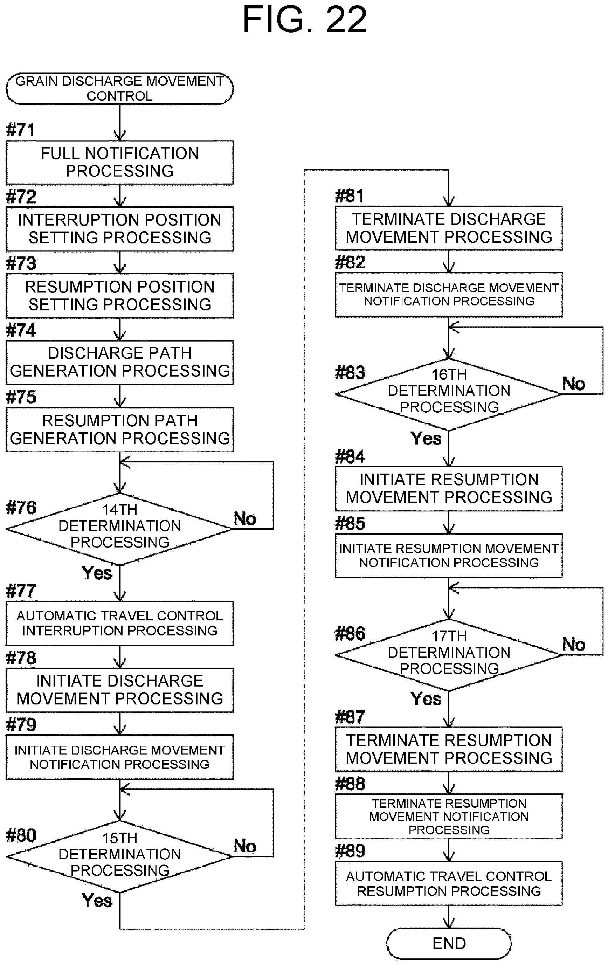

A description will hereinafter be made on the grain discharge movement control by the automatic travel control section 46F for harvesting work in the field Ad illustrated in FIG. 20 with reference to a flowchart in FIG. 22.

In conjunction with initiation of the grain discharge movement control, the automatic travel control section 46F performs full notification processing for notifying the user that the amount of the grain stored in the grain tank 9 has reached the grain discharge setting value by the display device 50 of the mobile communication terminal 5, or the like (step #71).

The automatic travel control section 46F performs the interruption position setting processing and the resumption position setting processing on the basis of the target path P and the current position of the combine harvester V3 (steps #72 to #73). In the interruption position setting processing, the work stop point (end point) p2 on the work path P1 where the combine harvester V3 currently travels is set as the grain discharge interruption position p3. In the resumption position setting processing, the next work start point (start point of the next work path P1) p1 from the interruption position p3 is set as the resumption position p4 after the grain discharge.

After setting the above positions, the automatic travel control section 46F performs discharge path generation processing and the resumption path generation processing by using the already-traveled path (paths indicated by bold lines of the target path P illustrated in FIG. 20) of the target path P and the manual travel path Rm stored in the vehicle-mounted storage section 46G (steps #74 to 75). In the discharge path generation processing, the shortest discharge movement path Pm6 from the grain discharge interruption position p3 to the discharge standby position p0 is generated. In the resumption path generation processing, the shortest resumption movement path Pm7 from the discharge standby position p0 to the resumption position p4 after the grain discharge is generated.

Although not illustrated, the resumption movement path Pm7 includes, in a path start end portion thereof, a direction changing path to change a direction of the combine harvester V3 from the reverse posture to the forward posture.

The automatic travel control section 46F performs fourteenth determination processing for determining whether the combine harvester V3 has reached the interruption position p3 (step #76). In the fourteenth determination processing, the automatic travel control section 46F continues the harvesting work by the automatic travel control until the combine harvester V3 reaches the interruption position p3. Then, in the case where the combine harvester V3 reaches the interruption position p3, the automatic travel control section 46F performs the automatic travel control interruption processing for interrupting the automatic travel control (step #77).

After the interruption of the automatic travel control, the automatic travel control section 46F initiates discharge movement processing and discharge movement notification processing (steps #78 to 79). In the discharge movement processing, the combine harvester V3 travels automatically from the interruption position p3 to the discharge standby position p0 along the discharge movement path Pm6. In the discharge movement notification processing, the user is notified that the combine harvester V3 currently travels to the discharge standby position p0 by the display device 50 of the mobile communication terminal 5, or the like.

The automatic travel control section 46F performs fifteenth determination processing for determining whether the combine harvester V3 has reached the discharge standby position p0 (step #80). In the fifteenth determination processing, the automatic travel control section 46F continues the discharge movement processing and the discharge movement notification processing until the combine harvester V3 reaches the discharge standby position p0. Then, when the combine harvester V3 reaches the discharge standby position p0, the automatic travel control section 46F terminates the discharge movement processing and the discharge movement notification processing and causes the combine harvester V3 to stand by at the discharge standby position p0 (step #81 to 82).

The automatic travel control section 46F performs sixteenth determination processing for determining whether the user has performed the touch operation on the display device 50 of the mobile communication terminal 5 to command the resumption of the automatic travel of the combine harvester V3 by the automatic travel control while the combine harvester V3 stands by at the discharge standby position p0 (step #83).

In the sixteenth determination processing, until the resumption of the automatic travel is commanded, the automatic travel control section 46F determines that the discharge of the grain from the grain tank 9 is not completed, and causes the combine harvester V3 to stand by at the discharge standby position p0. Then, in the case where the resumption of the automatic travel is commanded, the automatic travel control section 46F determines that the discharge of the grain from the grain tank 9 is completed, and initiates: the resumption movement processing for causing the combine harvester V3 to travel automatically from the discharge standby position p0 to the resumption position p4 along the resumption movement path Pm7; and the resumption movement notification processing for notifying the user that the combine harvester V3 currently travels to the resumption position p4 by the display device 50 of the mobile communication terminal 5, or the like (steps #84 to 85).

The automatic travel control section 46F performs seventeenth determination processing for determining whether the combine harvester V3 has reached the resumption position p4 (step #86). In the seventeenth determination processing, the automatic travel control section 46F continues the resumption movement processing and the resumption movement notification processing until the combine harvester V3 reaches the resumption position p4. Then, when the combine harvester V3 reaches the resumption position p4, the automatic travel control section 46F terminates the resumption movement processing and the resumption movement notification processing (steps #87 to 88).

After terminating the resumption movement processing and the resumption movement notification processing, the automatic travel control section 46F performs the automatic travel control resumption processing for resuming the automatic travel of the combine harvester V3 by the automatic travel control (step #89), and thereafter terminates the grain discharge movement control.

With the configuration that has been described so far, in this automatic travel system for a work vehicle, in the case where the user performs the touch operation on the standby position setting button that is displayed on the display device 50 of the mobile communication terminal 5, the standby position setting section 46K executes the standby position acquisition control to acquire the entry point of the combine harvester V3 to any of the fields Aa to Ag as the work target, and sets this entry point as the discharge standby position p0. In this way, the user no longer has to set the discharge standby position p0 for each of the fields Aa to Ag.

The entry point that is set at the discharge standby position p0 is the entrance/exit of each of the fields Aa to Ag, by which each of the fields Aa to Ag is connected to the farm road Rf or the like where the carrier vehicle Z for transporting the grain that is loaded with the grain from the grain tank 9 of the combine harvester V3, and the like can be stopped. In this way, the carrier vehicle Z for transporting the grain and the like can be stopped near the discharge standby position p0. As a result, after the combine harvester V3 reaches the discharge standby position p0, it is possible to smoothly perform grain discharge work from the grain tank 9 of the combine harvester V3 to the platform of the carrier vehicle Z, or the like.

In addition, in this automatic travel system for a work vehicle, in the case where the amount of the grain stored in the grain tank 9 reaches the grain discharge setting value, the automatic travel control section 46F executes the grain discharge movement control to move the combine harvester V3 to the discharge standby position p0 and then to stand by at the discharge standby position p0. In this way, the user no longer has to cause the combine harvester V3 to travel manually from the interruption position p3 to the discharge standby position p0.

Furthermore, in this automatic travel system for a work vehicle, in the case where the discharge of the grain from the grain tank 9 is completed and the user performs the touch operation on the display device 50 of the mobile communication terminal 5 to command the resumption of the automatic travel control of the combine harvester V3 by the automatic travel control while the combine harvester V3 stands by at the discharge standby position p0, the automatic travel control section 46F moves the combine harvester V3 from the discharge standby position p0 to the resumption position p4, and thereafter resumes the automatic travel of the combine harvester V3 along the target path P by the automatic travel control. In this way, the user no longer has to cause the combine harvester V3 to travel manually from the discharge standby position p0 to the resumption position p4.

In other words, the setting of the discharge standby position p0 in each of the fields Aa to Ag and the movement of the combine harvester V3 to the discharge standby position p0 can be performed automatically and appropriately. Thus, grain discharge work from the grain tank 9 of the combine harvester V3 can be performed efficiently while the burden on the user is reduced.

Moreover, in this automatic travel system for a work vehicle, the interruption position p3 of the harvesting work is set at the work stop point p2 of the currently traveled work path P1. Thus, even in the case where the amount of the grain stored in the grain tank 9 reaches the grain discharge setting value in the middle of the work path P1, the combine harvester V3 can continue the harvesting work to the work stop point p2 of the currently traveled work path P1 under the automatic travel control. In addition, the resumption position p4 after the grain discharge is set at the next work start point (start point of the next work path P1) p1 from the interruption position p3. Thus, for example, compared to a case where the resumption position p4 after the grain discharge (the interruption position p3 of the harvesting work) is set at the position in the middle of the currently traveled work path P1, in the discharge movement processing for causing the combine harvester V3 to travel automatically from the interruption position p3 to the discharge standby position p0, the combine harvester V3 no longer has to travel reversely from the interruption position p3, thereafter be switched to the forward travel state, and travel forward to the discharge standby position p0. As a result, the combine harvester V3 can travel automatically and efficiently to the discharge standby position p0.

In this automatic travel system for a work vehicle, in both of the discharge movement processing and the resumption movement processing, the combine harvester V3 travels along the already-traveled path of the target path P and the manual travel path Rm. Thus, it is possible to avoid a possibility that the combine harvester V3 tramples the unworked area Awb of each of the fields Aa to Ag.

Although not illustrated, in the selected field display screen 50B (see FIG. 7) displayed on the display device 50 of the mobile communication terminal 5, a touch operation can be performed to set the discharge standby position p0 at plural locations in the field Ad. In the case where such a touch operation is performed, the standby position setting section 46K sets the discharge standby position p0 at the plural locations in the field Ad corresponding to the touch operation.

As illustrated in FIG. 3, the vehicle-mounted control unit 46 includes a standby position selection section 46L (indicated by two-dot chain lines in FIG. 3) that selects the single discharge standby position p0 from the plural discharge standby positions p0 in the case where the discharge standby position p0 is set at the plural locations in the field Ad. The standby position selection section 46L is constructed of an electronic control unit, in which a microcontroller and the like are integrated, various control programs, and the like. The standby position selection section 46L is connected to the other control sections 46A to 46F, 46H, 46K of the vehicle-mounted control unit 46 and the like in the mutually communicable manner via the CAN.

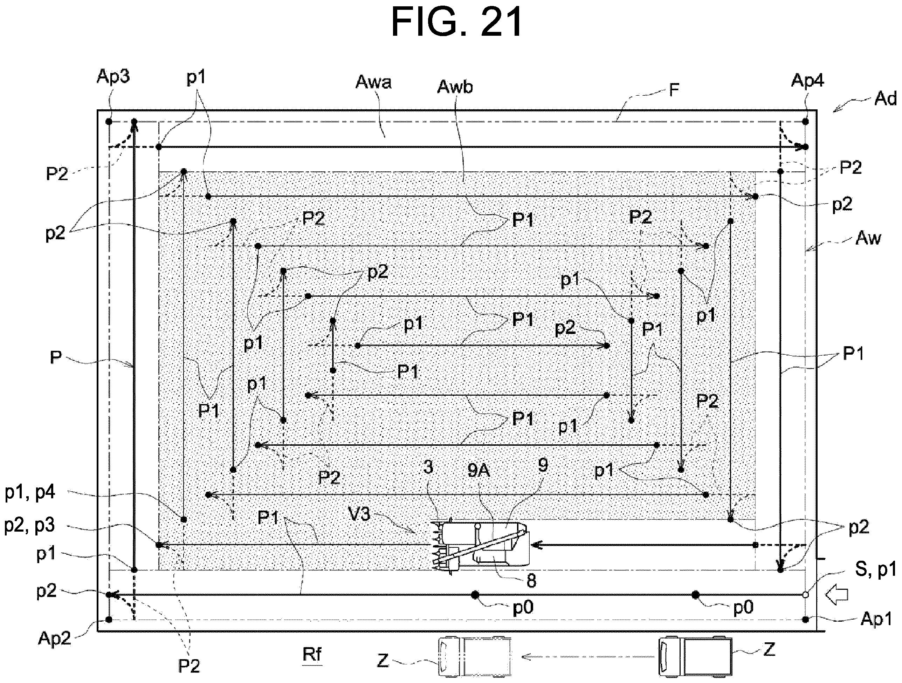

For example, as illustrated in FIG. 21, the plural (two in FIG. 21) discharge standby positions p0 are set at a field end of the field Ad, and the field end is adjacent to the farm road Rf, where the carrier vehicle Z for transporting the grain and the like can be stopped, and the like. In such a case, the standby position selection section 46L performs standby position selection processing for selecting the appropriate discharge standby position p0 for the current grain discharge work on the basis of the current position of the combine harvester V3 at the time when the above-described standby condition is satisfied, the number of movement of the combine harvester V3 to each of the discharge standby positions p0, and the like. In addition, the standby position selection section 46L performs selected standby position notification processing for notifying the user of the selected discharge standby position p0 by the display device 50 of the mobile communication terminal 5, or the like.

More specifically, for example, in the case where one of the discharge standby positions p0 is closer to the interruption position p3, which is set from the current position of the combine harvester V3 at the time when the above-described standby condition is satisfied, than the other discharge standby position p0, in the standby position selection processing, the standby position selection section 46L selects the one discharge standby position p0 that is closer as the current discharge standby position p0. In this way, it is possible to reduce the time required for the movement of the combine harvester V3 between the interruption position p3 and the discharge standby position p0 and thus to perform the grain discharge work efficiently.

Alternatively, for example, in the case where the number of the movement of the combine harvester V3 to the one discharge standby position p0 is smaller than the number of the movement of the combine harvester V3 to the other discharge standby position p0, in the standby position selection processing, the standby position selection section 46L selects the one discharge standby position p0 with the smaller number of the movement as the current discharge standby position p0. In this way, it is possible to suppress the discharge standby position p0 from becoming severely muddy due to the increased number of the movement of the combine harvester V3.

In addition, due to the selected standby position notification process by the standby position selection section 46L, the user can comprehend in advance the discharge standby position p0 to be used in the current grain discharge work. As a result, the user can move the carrier vehicle Z for transporting the grain or the like to the discharge standby position p0 in accordance with the movement of the combine harvester V3 to the discharge standby position p0 that is selected by the standby position selection section 46L in the grain discharge movement control by the automatic travel control section 46F.

### Fourth Embodiment

A description will hereinafter be made on, as an example of the mode for carrying out the present invention, a fourth embodiment in which the automatic travel system for a work vehicle according to the present invention is applied to the riding mower as an example of the work vehicle with reference to the drawings.

The automatic travel system for a work vehicle exemplified in this second embodiment differs from the automatic travel systems for a work vehicle exemplified in the first embodiment to the third embodiment in terms of, in addition to the applied work vehicle, the control actuation of the standby position setting section 46K and the automatic travel control section 46F, and the like. Thus, a description will be made on a main configuration of the applied work vehicle, the control actuation of the standby position setting section 46K and the automatic travel control section 46F, and the like.

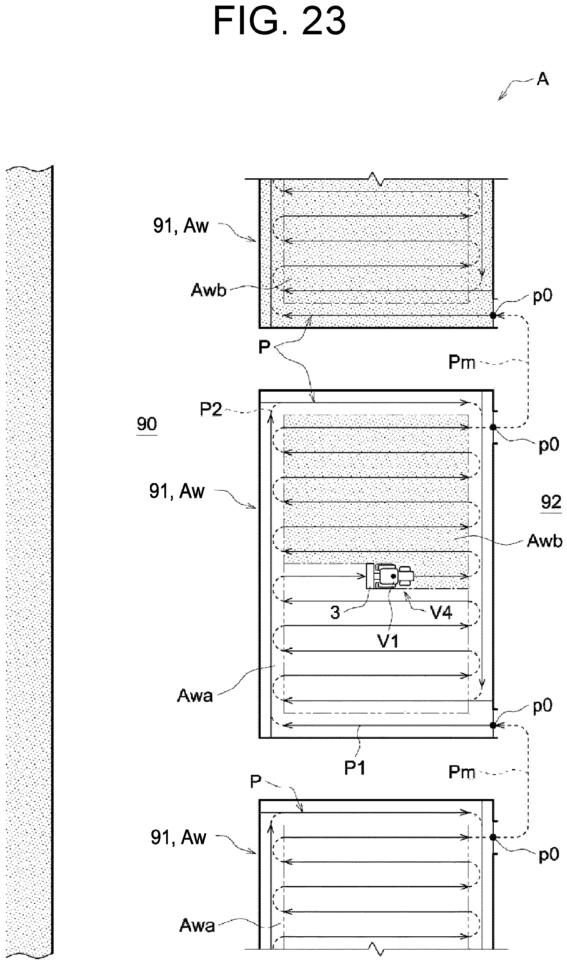

As illustrated in FIGs. 23 to 26, in a riding mower V4 exemplified in this fourth embodiment, a work device for mowing (hereinafter referred to as the mower) 3 is coupled to the rear portion of the tractor V1, which is exemplified in the first embodiment, via the three-point linkage mechanism 2. The mower 3 is coupled to the rear portion of the tractor V1 in the liftable and rollable manner. In FIG. 23, a landing area A of an airport is exemplified as an example of the registered work site.

As illustrated in FIGs. 23 to 26, the landing area A includes plural vegetated areas 91 that are adjacent to a runway 90. FIGs. 23 to 26 each illustrate an example of the work area Aw, which is identified by the target path generation section 51B for the landing area A, the generated target path P, and the like.

More specifically, each of the vegetated areas 91 is identified as the work area Aw for the landing area A, and the target path P is generated for each of the work areas Aw. Each of the target paths P includes: the four first work paths P1 along a periphery of the respective work area Aw; three second direction changing paths P2 that connect the plural first work paths P1 in a travel order of the riding mower V4; the plural second work paths P3 that are arranged in parallel at predetermined intervals corresponding to the work width of the mower 3; the single second direction changing path P4 that connects the last first work path P1 to the predetermined second work paths P3; the plural third direction changing paths P5 that connect the second work paths P3 in the travel order of the riding mower V4. Between the work areas Aw, a movement path Pm is generated to connect those target paths P in the travel order of the riding mower V4.

The target path P illustrated in FIGs. 23 to 26 merely constitutes an example. Based on the vehicle body information such as the turning radii, the work widths, and the like that vary by models and the like of the tractor V1 and the mower 3, work site information such as a shape, size, and the like of the vegetated area 91 that vary by the landing area A, and the like, the target path generation section 51B can generate the various target paths P that are suited for those.

Although not illustrated, in the selected field display screen 50B (see FIG. 7) that is displayed on the display device 50 of the mobile communication terminal 5, a touch operation can be performed to set a standby position (hereinafter referred to as an evacuation standby position) p0 (see FIGs. 23 to 26) of the riding mower V4 at the time of evacuating the riding mower V4 during takeoff and landing of an aircraft at plural locations away from the runway 90 by a predetermined distance or longer. In the case where such a touch operation is performed, the standby position setting section 46K sets the evacuation standby position p0 at the plural locations corresponding to the touch operation. In FIGs. 23 to 26, a connection point (entry/exit point) for each of the vegetated areas 91 that connects the respective vegetated area 91 in the landing area A to a perimeter road 92 located outside the landing area A is set as the evacuation standby position p0.

As illustrated in FIG. 3, the vehicle-mounted control unit 46 includes the standby position selection section 46L (indicated by the two-dot chain lines in FIG. 3) that selects the single evacuation standby position p0 from the plural evacuation standby positions p0. The standby position selection section 46L is constructed of the electronic control unit, in which the microcontroller and the like are integrated, the various control programs, and the like. The standby position selection section 46L is connected to the other control sections 46A to 46F, 46H, 46K of the vehicle-mounted control unit 46 and the like in the mutually communicable manner via the CAN.

In the case where a standby condition to cause the riding mower V4 to stand by at the evacuation standby position p0 is satisfied, the standby position selection section 46L executes standby position selection control to select the evacuation standby position p0 that the riding mower V4 can reach in the shortest time.

In this fourth embodiment, since the registered work site is the landing area A of the airport, the standby position selection section 46L is set to determine that the standby condition is satisfied in the case where the standby position selection section 46L receives an advance notification from a control tower at the time of takeoff and landing of the aircraft at the airport.

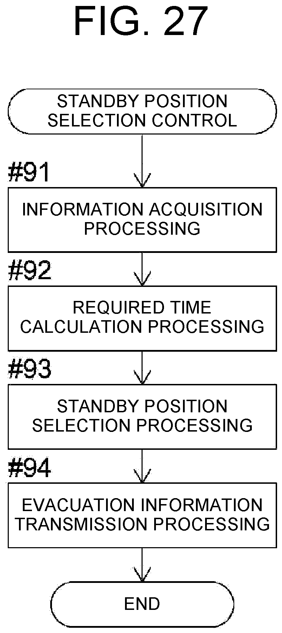

A description will hereinafter be made on the standby position selection control by the standby position selection section 46L in the vegetated area 91 illustrated in FIGs. 23 to 26 with reference to a flowchart in FIG. 27.

When the standby condition is satisfied, the standby position selection section 46L performs the information acquisition processing for acquiring the current position, the travel state, and the like of the riding mower V4 at the time (step #91).

The standby position selection section 46L estimates plural evacuation paths to each of the evacuation standby positions p0, a travel mode of the riding mower V4, and the like according to the acquired information, and performs required time calculation processing for calculating a required time for the riding mower V4 to reach each of the evacuation standby positions p0 from the estimated evacuation paths, travel mode, and the like (step #92).

The standby position selection section 46L performs the standby position selection processing and evacuation information transmission processing (steps #93 to 94). In the standby position selection processing, the evacuation standby position p0 with the calculated required time being the shortest is selected as the current evacuation standby position p0. In the evacuation information transmission processing, together with the selected evacuation standby position p0, an evacuation path Pm8 suited for movement to the evacuation standby position p0, the travel mode, and the like are transmitted as evacuation information to the automatic travel control section 46F. Thereafter, the standby position selection section 46L terminates the standby position selection control.

When receiving the evacuation information from the standby position selection section 46L, the automatic travel control section 46F determines that the standby condition to cause the riding mower V4 to stand by at the evacuation standby position p0 is satisfied. Then, the automatic travel control section 46F executes evacuation movement control to cause the riding mower V4 to travel automatically to the evacuation standby position p0 and to stand by at the evacuation standby position p0 according to the evacuation path Pm8, the travel mode, and the like included in the evacuation information from the standby position selection section 46L.

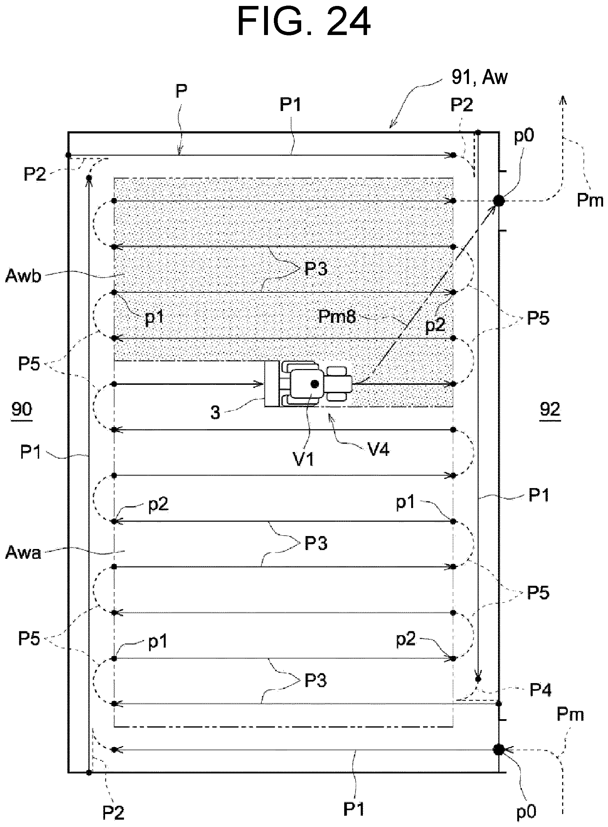

More specifically, for example, as illustrated in FIG. 24, in the case where a current position of the riding mower V4 at the time when the standby position selection section 46L receives the advance notification from the above-described control tower is located closer to the evacuation standby position p0 set on an end side of the target path P than to the evacuation standby position p0 set on a start side of the target path P and where the travel state of the riding mower V4 is a forward travel state toward the perimeter road 92, the standby position selection section 46L selects the evacuation standby position p0 on the end side as the current evacuation standby position p0, and transmits, as the evacuation information, the evacuation standby position p0 on the end side, the shortest evacuation path Pm8 from the current position of the riding mower V4 to the evacuation standby position p0 on the end side, the forward travel, and the like to the automatic travel control section 46F. Then, based on the evacuation information from the standby position selection section 46L, the automatic travel control section 46F causes the riding mower V4 to travel forward to the evacuation standby position p0 on the end side along the evacuation path Pm8.

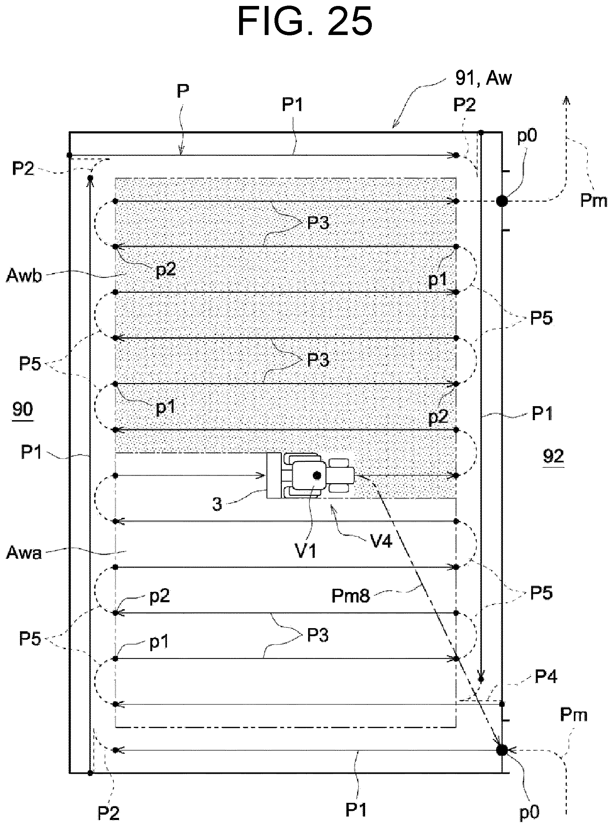

For example, as illustrated in FIG. 25, in the case where the current position of the riding mower V4 at the time when the standby position selection section 46L receives the advance notification from the above-described control tower is located closer to the evacuation standby position p0 on the start side than to the above-described evacuation standby position p0 on the end side and where the travel state of the riding mower V4 is the forward travel state toward the perimeter road 92, the standby position selection section 46L selects the evacuation standby position p0 on the start side as the current evacuation standby position p0, and transmits, as the evacuation information, the evacuation standby position p0 on the start side, the shortest evacuation path Pm8 from the current position of the riding mower V4 to the evacuation standby position p0 on the start side, the forward travel, and the like to the automatic travel control section 46F. Then, based on the evacuation information from the standby position selection section 46L, the automatic travel control section 46F causes the riding mower V4 to travel forward to the evacuation standby position p0 on the start side along the evacuation path Pm8.

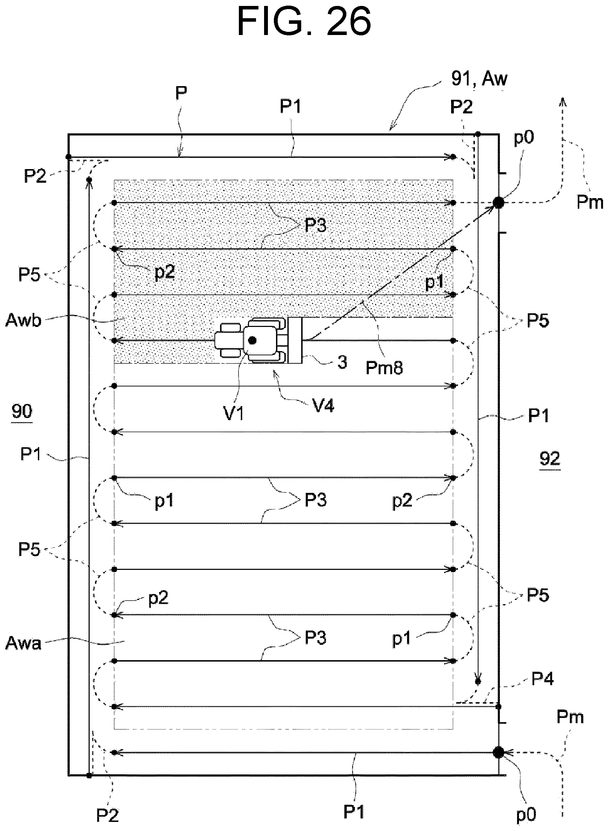

For example, as illustrated in FIG. 26, in the case where the current position of the riding mower V4 at the time when the standby position selection section 46L receives the advance notification from the above-described control tower is located closer to the evacuation standby position p0 on the end side than to the above-described evacuation standby position p0 on the start side and where the travel state of the riding mower V4 is the forward travel state toward the runway 90, the standby position selection section 46L selects the evacuation standby position p0 on the end side as the current evacuation standby position p0, and transmits, as the evacuation information, the evacuation standby position p0 on the end side, the shortest evacuation path Pm8 from the current position of the riding mower V4 to the evacuation standby position p0 on the end side, reverse travel, and the like to the automatic travel control section 46F. Then, based on the evacuation information from the standby position selection section 46L, the automatic travel control section 46F causes the riding mower V4 to travel reversely to the evacuation standby position p0 on the end side along the evacuation path Pm8.

With the configuration that has been described so far, in this automatic travel system for a work vehicle, in the case where the standby condition to cause the riding mower V4 to stand by at the evacuation standby position p0 is satisfied, the standby position setting section 46K executes the standby position selection control, and selects the optimal evacuation standby position p0 at the time when the standby condition is satisfied (at the time of takeoff and landing of the aircraft). In this way, the user no longer has to select the optimal evacuation standby position p0, which varies from time to time, when the standby condition is satisfied.

In addition, the automatic travel control section 46F executes the evacuation movement control on the basis of the evacuation information from the standby position setting section 46K, moves the riding mower V4 to the optimal evacuation standby position p0 in the shortest time, and thereafter causes the riding mower V4 to stand by at the evacuation standby position p0. In this way, the user no longer has to cause the riding mower V4 to travel manually to the evacuation standby position p0.

In other words, the selection of the evacuation standby position p0 in the landing area A of the airport and the movement of the riding mower V4 to the evacuation standby position p0 can be performed automatically and appropriately. Thus, the riding mower V4 can move favorably to the evacuation standby position p0 according to takeoff and landing of the aircraft while the burden on the user is reduced.

### Other embodiments

A description will be made on other embodiments of the present invention. Note that a configuration of each of the other embodiments described below can be applied not only independently but can also be applied in combination with the configuration of another embodiment.
(1) Other typical embodiments regarding the configuration of the work vehicle are as follows. For example, the work vehicle may be configured to have an electric specification that includes an electric motor instead of the engine 13. For example, the work vehicle may be configured to have a hybrid specification that includes the engine 13 and the electric motor.
(2) The automatic travel system for a work vehicle exemplified in the first embodiment can be applied to, in addition to the tractor V1 having the sowing specification, the work vehicles such as the tractor V1 having a sowing and fertilizing specification in which a sowing and fertilizing work device 3 is coupled to the rear portion of the tractor V1 via the three-point linkage mechanism 2, the tractor V1 having a fertilizing specification in which the fertilizing work device 3 is coupled to the rear portion of the tractor V1 via the three-point linkage mechanism 2, the riding rice transplanter V2 exemplified in the second embodiment, the riding rice transplanter V2 with a fertilizing function that includes the fertilizer application device in addition to the seedling planting device 3, the riding rice transplanter V2 with a chemical application function that includes the chemical spraying device in addition to the seedling planting device 3.
(3) The automatic travel system for a work vehicle exemplified in the second embodiment can be applied to, in addition to the riding rice transplanter V2, the work vehicles such as the riding rice transplanter V2 with the above-described fertilizing function, the riding rice transplanter V2 with the chemical application function, the tractor V1 with the sowing specification, the tractor V1 having the sowing and fertilizing specification, and the tractor V1 in a fertilizing specification.
(4) The automatic travel system for a work vehicle exemplified in the third embodiment can be applied to, in addition to the combine harvester V3, the work vehicle such as a harvester for harvesting corn or the like.
(5) The automatic travel system for a work vehicle exemplified in the fourth embodiment can be applied to, in addition to the riding mower V4, the work vehicles such as the tractor V1, the snowplow, and the wheel loader having a rotary cultivation specification, in each of which the rotary cultivator is coupled to the rear portion of the tractor V1 via the three-point linkage mechanism 2.
(6) In the automatic travel system for a work vehicle exemplified in the fourth embodiment, the standby position selection section 46L may be configured to transmit, to the automatic travel control section 46F, the evacuation path Pm8 on which the work vehicle (the riding mower V4) is moved to the evacuation standby position p0 after termination of the work on the current work path P1 in the case where there is a time margin to terminate the work on the work path P1 before the work vehicle is moved from the current position to the evacuation standby position p0.

### Additional Statements of the Invention

A first characteristic configuration of the present invention is in a point that the automatic travel system for a work vehicle includes: the automatic travel control section that causes the work vehicle to travel automatically along the target path at the registered work site by using the satellite positioning system; and a standby position setting section that sets the standby position of the work vehicle, in which the standby position setting section acquires the entry point at the time of entering the registered work site from outside the registered work site and sets the entry point as the standby position, and in which the automatic travel control section determines whether the standby condition to cause the work vehicle to stand by at the standby position is satisfied and, in the case where the standby condition is satisfied, causes the work vehicle to travel automatically from the current position to the standby position and to stand by at the standby position.

With such a configuration, in the case where the user causes the work vehicle to travel manually toward the registered work site, the standby position setting section acquires the entry point of the work vehicle to the registered work site, and sets this entry point as the standby position. In this way, the user no longer has to set the standby position per registered work site where the work is performed.

For example, in the case where the registered work site is the field, the entry point, which is set as the standby position, is the entrance/exit to/from the registered field that connects the registered field to the farm road or the like outside the field. For example, in the case where the registered work site is the landing area at the airport, the entry point, which is set as the standby position, is the entrance/exit to/from the registered landing area that connects the registered landing area to the perimeter road or the like outside the registered landing area.

In this way, for example, in the case where the work vehicle is the riding rice transplanter that plants the seedlings in the field or the riding fertilizer application machine that supplies the fertilizer to the field, the entrance/exit (entry point), which connects the field to the farm road or the like, where the carrier vehicle or the like loaded with the agricultural materials such as the replenishment seedlings or fertilizer can be stopped, is set as the standby position of the work vehicle at the time of replenishing the agricultural materials to the work vehicle. In addition, in the case where the work vehicle is the harvester such as the combine harvester that harvests crops such as rice or soybeans in the field, the entrance/exit (entry point) that connects the field to the farm road or the like where the carrier vehicle or the like, to which the harvested crops are transferred, can be stopped is set as the standby position of the work vehicle at the time of transferring the crops from the work vehicle to the carrier vehicle or the like. In this way, it is possible to easily replenish the agricultural materials, to easily transfer the crops from the work vehicle to the carrier vehicle or the like, and the like.

Meanwhile, in the case where the work vehicle is the mower or the like that mows grass in the vegetated area around the runway in the landing area at the airport, the entrance/exit (entry point) that connects the landing area to the perimeter road or the like outside the landing area is set as the standby position of the work vehicle at the time of evacuating the work vehicle during takeoff and landing of the aircraft. In this way, it is possible to evacuate the work vehicle to a position away from the runway during takeoff and landing of the aircraft.

In the case where, as the standby condition to cause the work vehicle to stand by at the standby position, for example, a shortage of the remaining amount of the agricultural materials, excess storage of the crops, or the like in the work vehicle is set, upon satisfaction of any of these conditions, the work vehicle travels automatically from the current position to the standby position for replenishing the materials or transferring the crops, and stands by at the standby position. Meanwhile, in the case where, as the standby condition to cause the work vehicle to stand by at the standby position, for example, the reception of the advance notification from the control tower at the time when the aircraft is taking off or landing at the airport, or the like is set, upon satisfaction of this condition, the work vehicle travels automatically from the current position to the evacuation standby position, and stands by at the standby position. In this way, the user no longer has to cause the work vehicle to travel manually from the current position to the standby position.

In other words, it is possible to set the standby position suitable for a reason for standby of the work vehicle, a work situation, and the like while reducing the burden on the user. In addition, when the standby condition is satisfied, the work vehicle can travel automatically to the appropriate standby position. In the case where the work vehicle is an agricultural work machine such as the riding rice transplanter or the combine harvester, it is possible to efficiently perform the work such as the replenishment of the materials to the work vehicle or the transfer of the crops from the work vehicle at the standby position. In the case where the work vehicle is the mower that works the landing area at the airport, the work in the landing area can be performed favorably without interfering with takeoff and landing of the aircraft.

A second characteristic configuration of the present invention is in a point that the automatic travel control section that causes the work vehicle to travel automatically along the target path at the registered work site by using the satellite positioning system and the standby position setting section that sets the standby position of the work vehicle are provided, the standby position setting section sets the intersection point of the extension line of the work path included in the target path with the outline of the registered work site as the standby position, and the automatic travel control section determines whether the standby condition to cause the work vehicle to stand by at the standby position is satisfied and, in the case where the standby condition is satisfied, causes the work vehicle to travel automatically from the current position to the standby position and to stand by at the standby position.

With such a configuration, the standby position setting section acquires the above-described intersection point from the target path and the outline of the work site included in the registration information on the registered work site, and sets this intersection point as the standby position. In this way, the user no longer has to set the standby position per work site.

For example, in the case where the registered work site is the field, the intersection point of the extension line of the work path, which is included in the target path generated according to the work in the field, with the outline of the field as a boundary between the inside and the outside of the field is set as the standby position. In this way, it is possible to shorten the travel distance of the work vehicle from the current position to the standby position.

Furthermore, for example, in the case where the work vehicle is the agricultural work machine such as the riding rice transplanter or the combine harvester that works in the field, as the standby condition to cause the work vehicle to stand by at the standby position, the shortage of the remaining amount of the agricultural materials, the excess storage of the crops, or the like in the work vehicle is set. In such a case, upon satisfaction of any of these conditions, the work vehicle travels automatically from the current position to the standby position, which is the intersection point of the extension line of the currently traveled work path with the outline of the field, and stands by at the standby position. In this way, the user no longer has to cause the work vehicle to travel manually from the current position to the standby position.

In other words, it is possible to set the standby position suitable for the reason for the standby of the work vehicle, the work situation, and the like while reducing the burden on the user. In addition, when the standby condition is satisfied, the work vehicle can travel automatically to the appropriate standby position. In the case where the work vehicle is the agricultural work machine such as the riding rice transplanter or the combine harvester, it is possible to efficiently perform the work, such as the replenishment of the materials to the work vehicle or the transfer of the crops from the work vehicle, including the movement to the standby position.

A third characteristic configuration of the present invention is in a point that the specifying section is provided to specify, of plural outline identification lines identifying the outline of the registered work site, the outline identification line with which the standby position can be set.

With such a configuration, in regard to the outline identification line that is adjacent to the obstacle such as a ditch or a wall interfering with the movement of the work vehicle to the standby position, such an outline specific line that the obstacle such as the tree or an electric wire interfering with the replenishment of the materials to the work vehicle having moved to the standby position or the transfer of the crops from the work vehicle exists nearby, and the like, it is possible to prevent occurrence of such an inconvenience that the intersection point of any of those outline identification lines with the extension line of the work path is set as the standby position.

In other words, it is possible to avoid a possibility that the standby position unsuitable for the reason for the standby of the work vehicle, the work condition, or the like is set. As a result, it is possible to avoid the occurrence of such inconveniences that the work vehicle cannot travel automatically to the standby position even when the standby condition to cause the work vehicle to stand by at the standby position is satisfied and that it is difficult to replenish the materials to the work vehicle, transfer the crops from the work vehicle, or the like even when the work vehicle stands by at the standby position.

A fourth characteristic configuration of the present invention is in a point that the automatic travel control section that causes the work vehicle to travel automatically along the target path at the registered work site by using the satellite positioning system, the standby position setting section that sets the standby position of the work vehicle at the plural locations in the registered work site, the standby position selection section that selects the single standby position from the plural standby positions are provided, and the automatic travel control section determines whether the standby condition to cause the work vehicle to stand by at the standby position is satisfied and, in the case where the standby condition is satisfied, causes the work vehicle to travel automatically from the current position to the standby position selected by the standby position selection section and to stand by at the standby position.

With such a configuration, the standby position selection section can select, from the standby positions at the plural locations set by the standby position setting section, the single standby position that is suited for the current position of the work vehicle or the like at the time when the standby condition to cause the work vehicle to stand by at the standby position is satisfied. In this way, the user no longer has to select the standby position suited for the current position of the work vehicle or the like that varies from time to time when the above-described standby condition is satisfied.

In the case where, as the standby condition to cause the work vehicle to stand by at the standby position, for example, the shortage of the remaining amount of the agricultural materials, the excess storage of the crops, or the like in the work vehicle is set, upon satisfaction of any of these conditions, the work vehicle travels automatically from the current position to the selected standby position for replenishing the materials or transferring the crops, and stands by at the standby position. Meanwhile, in the case where, as the standby condition to cause the work vehicle to stand by at the standby position, for example, the reception of the advance notification from the control tower at the time when the aircraft is taking off or landing at the airport, or the like is set, upon satisfaction of this condition, the work vehicle travels automatically from the current position to the selected evacuation standby position, and stands by at the standby position. In this way, the user no longer has to cause the work vehicle to travel manually from the current position to the standby position.

In other words, it is possible to select the standby position suited for the work situation, such as the current position of the work vehicle, or the like which varies from time to time when the above-described standby condition is satisfied, while reducing the burden on the user. In addition, when the standby condition is satisfied, the work vehicle can travel automatically to the appropriate standby position. In the case where the work vehicle is the agricultural work machine such as the riding rice transplanter or the combine harvester, it is possible to efficiently perform the work such as the replenishment of the materials to the work vehicle or the transfer of the crops from the work vehicle at the standby position. In the case where the work vehicle is the mower that works the landing area at the airport, the work in the landing area can be performed favorably without interfering with takeoff and landing of the aircraft.

## Claims

1. An automatic travel system for a work vehicle comprising:
an automatic travel control section that causes a work vehicle to travel automatically along a target path at a registered work site by using a satellite positioning system; and a standby position setting section that sets a standby position of the work vehicle, wherein
the standby position setting section acquires an entry point at a time when the work vehicle enters the registered work site from outside the registered work site, and sets the entry point as the standby position, and
the automatic travel control section determines whether a standby condition to cause the work vehicle to stand by at the standby position is satisfied and, in the case where the standby condition is satisfied, causes the work vehicle to travel automatically from a current position to the standby position and to stand by at the standby position.

2. An automatic travel system for a work vehicle comprising:
an automatic travel control section that causes a work vehicle to travel automatically along a target path at a registered work site by using a satellite positioning system; and a standby position setting section that sets a standby position of the work vehicle, wherein
the standby position setting section sets an intersection point of an extension line of a work path included in the target path with an outline of the registered work site, as the standby position, and
the automatic travel control section determines whether the standby condition to cause the work vehicle to stand by at the standby position is satisfied and, in the case where the standby condition is satisfied, causes the work vehicle to travel automatically from a current position to the standby position and to stand by at the standby position.

3. The automatic travel system for a work vehicle according to claim 2 further comprising:
a specifying section that specifies, of plural outline identification lines identifying the outline of the registered work site, an outline identification line with which the standby position can be set.

4. An automatic travel system for a work vehicle comprising:
an automatic travel control section that causes the work vehicle to travel automatically along a target path at a registered work site by using a satellite positioning system; a standby position setting section that sets a standby position of the work vehicle at plural locations in the registered work site; and a standby position selection section that selects a single standby position from the plural standby positions, wherein
the automatic travel control section determines whether a standby condition to cause the work vehicle to stand by at the standby position is satisfied and, in the case where the standby condition is satisfied, causes the work vehicle to travel automatically from a current position to the standby position selected by the standby position selection section and to stand by at the standby position.
